(19) Europäisches Patentamt
European Patent Office
Office européen des brevets

(11) **EP 3 171 665 B1**

(12) **EUROPEAN PATENT SPECIFICATION**

(45) Date of publication and mention
of the grant of the patent:
**18.12.2019 Bulletin 2019/51**

(51) Int Cl.:
***H04W 88/12*** *(2009.01)*   ***H04W 48/20*** *(2009.01)*
***H04W 28/08*** *(2009.01)*

(21) Application number: **14898779.5**

(22) Date of filing: **31.07.2014**

(86) International application number:
**PCT/CN2014/083412**

(87) International publication number:
**WO 2016/015277 (04.02.2016 Gazette 2016/05)**

(54) **PROCESSING METHOD AND DEVICE FOR OPTIMIZING COMMUNICATION NETWORK**

VERARBEITUNGSVERFAHREN UND -VORRICHTUNG ZUR OPTIMIERUNG EINES KOMMUNIKATIONSNETZWERKS

PROCÉDÉ ET DISPOSITIF DE TRAITEMENT POUR OPTIMISER UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.05.2017 Bulletin 2017/21**

(73) Proprietor: **Huawei Technologies Co., Ltd.**
**Longgang District**
**Shenzhen, Guangdong 518129 (CN)**

(72) Inventors:
• **YI, Youwen**
 **Shenzhen**
 **Guangdong 518129 (CN)**
• **ZHUANG, Hongcheng**
 **Shenzhen**
 **Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
EP-A1- 2 760 237       CN-A- 102 869 052
CN-A- 103 039 112      CN-A- 103 139 890
CN-A- 103 918 303      GB-A- 2 397 469
US-A1- 2013 065 599    US-A1- 2013 260 712

## Description

## TECHNICAL FIELD

Embodiments of the present invention relate to the field of communications technologies, and in particular, to a communications network optimization processing method and a device.

## BACKGROUND

As types of mobile services are increasingly enriched, and a required rate of terminals is increasingly high, a capacity of a communications network needs to be expanded continually to meet ever-increasing requirements. Because of limited available frequency spectrums, a currently most effective means for network capacity expansion is: adding a micro base station (micro cell base station) on a basis of an existing macro base station (macro base station), to increase a network capacity by means of spectral multiplexing. The micro base station features low transmission power and a small coverage area, which can effectively reduce interference to a neighboring cell. Therefore, during network deployment, the micro base station is generally disposed in a network hotspot area or hole area, so as to resolve problems about a network capacity and network coverage. Compared with the macro base station, both a picocell (picocell) base station and a femtocell (femtocell) base station are micro base stations.

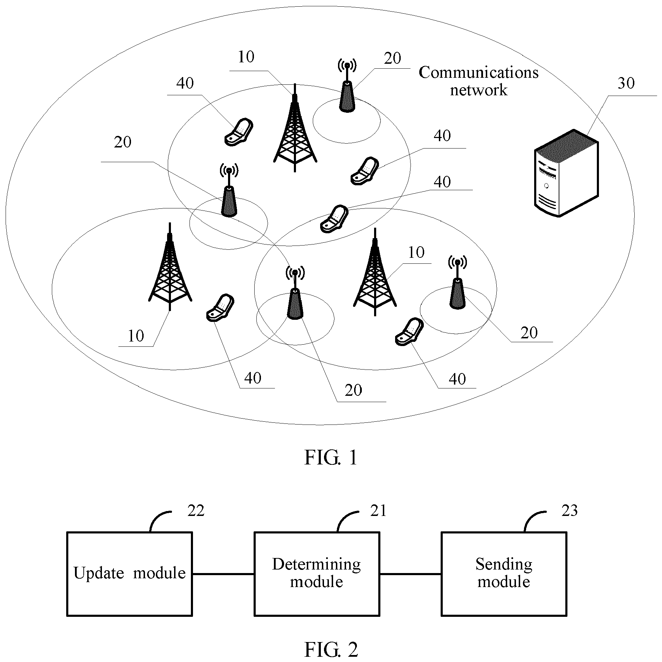

FIG. 1 is a schematic diagram of a communications network in the prior art. As shown in FIG. 1, the communications network includes a macro base station 10, a micro base station 20, a network controller 30 (the network controller is a core of a wireless network, is configured to manage a base station in the wireless network, and may be an independent device or may be integrated into a macro base station), and a terminal 40. The communications network is a heterogeneous network in which the micro base station 20 and the macro base station 10 coexist. The network controller 30 can implement network resource or configuration optimization for the communications network. A coverage area of the micro base station 20 is far less than that of the macro base station 10, but a quantity of micro base stations 20 in the network is far greater than that of macro base stations 10. The terminal 40 used by a user can dynamically choose to access the macro base station 10 or the micro base station 20, to obtain a network service. Changes of a quantity of terminals and services requested by the terminals lead to dynamic changes of loads of the macro base station 10 and the micro base station 20 in the communications network, a hotspot location and a hole location in the communications network, and the like. Therefore, how to optimize a configuration of the communications network to better adapt to the dynamic change of the communications network is a new challenge for a heterogeneous communications network including a macro base station and a micro base station. According to a 3GPP (3rd Generation Partnership Project, 3rd Generation Partnership Project) standard, the network controller 30 can enable the micro base station 20 to change a CSB (Cell Selection Bias, cell selection bias) value, so as to change an access status of the terminal 40 in the communications network. Therefore, the loads of the macro base station 10 and the micro base station 20 are adjusted to optimize the communications network.

In the prior art, a network controller first determines an ABS (Almost Blank Subframe, almost blank subframe) value of each macro base station and a situation of terminals that access each macro base station or each micro base station under the influence of the ABS value, and further determines, for each micro base station, a CSB value used to optimize a communications network. Roles played by a macro base station and a micro base station are different in the communications network. For example, the micro base station mainly resolves a problem in a hotspot area or hole area. The network hotspot area or hole area varies greatly with time; therefore, a period for adjusting the CSB value needs to be shortened as much as possible, so as to resolve the current problem in the hotspot area or hole area in the communications network effectively in a timely way. However, when the communications network is optimized by using a prior-art solution, because the network controller adjusts an ABS value and a CSB value in a network-wide range by using one time granularity, the network controller needs to adjust the ABS value and the CSB value frequently at the same time to adapt to a dynamic change of the communications network, which leads to relatively high signaling overheads and affects service performance of the communications network.

EP 2760237 A1 discloses a network node method, a computer program product and a network node. The network node method comprises: providing a first indication of a first cell performance and a second indication of a second cell performance; determining from the first and second indications whether the first cell performance differs from the second cell performance; and if the first cell performance differs from the second cell performance, then adjusting a bias for at least one of the first cell and the second cell to adjust a user equipment association with that cell. Accordingly, a decentralization bias adaption approach is provided by suggesting the bias for a cell based on its performance compared to another cell. This enables the bias to be set by each base station individually based on its comparative performance with other cells. This enables the bias to be adjusted dynamically, based on the actual performance of the cells under different operating conditions, without the need for a complicated and centralized control of user association. Instead, a base station typically only needs to be able to determine the performance of its cell compared to that of a cell of another base station in order to make an assessment of whether a bias adjustment for that cell is necessary.

## SUMMARY

Embodiments of the present invention provide a communications network optimization processing method and a device, which are used to optimize a communications network. According to a first aspect, an embodiment of the present invention provides a micro base station, including:

a determining module, configured to determine an optimized CSB value according to a capacity and coverage of the micro base station;
an update module, configured to update a current CSB value of the micro base station to the optimized CSB value; and
a sending module, configured to send the optimized CSB value of the micro base station to at least one terminal.

With reference to the first aspect, in a first implementation manner, the micro base station further includes a receiving module, where

the sending module is further configured to send the optimized CSB value to a neighboring micro base station;
the receiving module is configured to receive a current CSB value of the neighboring micro base station;
the determining module is further configured to determine, according to the optimized CSB value of the micro base station and the current CSB value of the neighboring micro base station, an actual situation of a terminal that accesses the micro base station; and
if the actual situation is different from an expected situation, of the terminal that accesses the micro base station, corresponding to the optimized CSB value of the micro base station, the determining module is configured to determine an optimized CSB value.

With reference to the first implementation manner of the first aspect, in a second implementation manner, the receiving module is further configured to receive parameter information; and the parameter information carries a capacity weight of the micro base station and a coverage weight of the micro base station.

With reference to the second implementation manner of the first aspect, in a third implementation manner, the determining module specifically includes:

an obtaining unit, configured to obtain at least one candidate CSB value;
a determining unit, configured to determine, according to $\max 1 = \omega_{1s} C_{ov}^{s} + \omega_{2s} C_{ap}^{s}$, a candidate result corresponding to each candidate CSB value; and
a selection unit, configured to use, as the optimized CSB value of the micro base station, a candidate CSB value corresponding to a greatest candidate result in the candidate result, where
max 1 is the candidate result, $\omega_{1s}$ represents the coverage weight of the micro base station, and $\omega_{2s}$ represents the capacity weight of the micro base station; $C_{ov}^{s}$ is a coverage-related key performance indicator KPI of the micro base station; $C_{ap}^{s}$ is a capacity-related KPI of the micro base station, $C_{ov}^{s} = R_{s}^{z\%-ile}$, and $C_{ap}^{s} = \sum_{e}[R_{e,s} \times h(R_{e,s}, R_{e}^{req})]$; $R_{s}^{z\%-ile}$ is a mean of association rates, for the micro base station, corresponding to z% terminals in a set $E_s$, and an association rate between any terminal in the z% terminals and the micro base station is not greater than an association rate between any terminal in the set $E_s$ except the z% terminals and the micro base station; a different candidate CSB value corresponds to a different set $E_s$, and z% terminals in the different set $E_s$ correspond to different $R_{s}^{z\%-ile}$; and e represents any terminal in the set $E_s$, $R_{e,s}$ represents an association rate of the terminal e in the set $E_s$ associated with the micro base station, $R_{e}^{req}$ is a required rate of the terminal e, and a value of $h(R_{e,s}, R_{e}^{req})$ is determined according to $h(x, x_0) = \begin{cases} 1, & x \geq x_0 \\ 0, & x < x_0 \end{cases}$.

With reference to the third implementation manner of the first aspect, in a fourth implementation manner, the obtaining unit is specifically configured to:

obtain a receive power, for the micro base station, of each terminal of the at least one terminal and a receive power, for a macro base station, of each terminal of the at least one terminal according to a first CSB value;
add the first CSB value and the receive power, for the micro base station, of each terminal of the at least one terminal to obtain a first value corresponding to each terminal of the at least one terminal;
determine, in the at least one terminal according to the first value corresponding to each terminal of the at least one terminal and the receive power, for the macro base station, of each terminal of the at least one terminal, a set $E_s$ corresponding to the first CSB value; and
if it is determined, according to the set $E_s$ corresponding to the first CSB value, that a load of the micro base station corresponding to the first CSB value is equal to 1, use the first CSB value as the candidate CSB value; or
if it is determined, according to the set $E_s$ corresponding to the first CSB value, that a load of the micro base station corresponding to the first CSB value is less than 1, use the first CSB value as the candidate CSB value, and increase the first CSB value by a preset step to obtain a new first CSB value, until the first CSB value reaches a preset threshold CSB value.

According to a second aspect, an embodiment of the present invention provides a network controller, including:

a determining module, configured to determine an optimized ABS value for each macro base station; and
a sending module, configured to send the corresponding optimized ABS value to each macro base station, where the determining module is further configured to determine a capacity and coverage for a micro base station according to a current hotspot location and hole location in a communications network; and
the sending module is further configured to send an ABS value optimization completion message to the micro base station, where the ABS value optimization completion message carries the capacity and coverage of the micro base station.

With reference to the second aspect, in a first implementation manner, there is at least one current hotspot location and at least one current hole location, and the determining module specifically includes:

an obtaining unit, configured to obtain a first measured distance between the micro base station and each hotspot location and a second measured distance between the micro base station and each hole location;
a first determining unit, configured to: determine a smallest first measured distance in the at least one first measured distance as a first distance, and determine a smallest second measured distance in the at least one second measured distance as a second distance; and
a second determining unit, configured to determine a coverage weight and a capacity weight according to the first distance and the second distance.

With reference to the first implementation manner of the second aspect, in a second implementation manner, the second determining unit is specifically configured to:

if the micro base station is not a planned and deployed network element, determine the coverage weight according to the first distance, the second distance, and a previous coverage weight, and determine the capacity weight according to the first distance, the second distance, and a previous capacity weight; or
if the micro base station is a planned and deployed network element, determine the coverage weight according to the first distance, the second distance, a previous coverage weight, and an initial coverage weight, and determine the capacity weight according to the first distance, the second distance, a previous capacity weight, and an initial capacity weight.

With reference to the second implementation manner of the second aspect, in a third implementation manner, if the micro base station is not a planned and deployed network element, the second determining unit is specifically configured to:

determine the coverage weight according to $\omega_{1s} = \dfrac{\lambda\omega_{1s}^{'}}{(\lambda-1)\omega_{1s}^{'}+1}$ , and determine the capacity weight according

to $\omega_{2s} = \dfrac{\omega_{2s}^{'}}{(1-\lambda)\omega_{2s}^{'}+\lambda}$ ; or

if the micro base station is a planned and deployed network element, the second determining unit is specifically configured to: determine the coverage weight according to $\omega_{1s} = \alpha \dfrac{\lambda \omega_{1s}'}{(\lambda - 1)\omega_{1s}' + 1} + (1 - \alpha)\omega_{1s}^0$ , and deter-

mine the capacity weight according to $\omega_{2s} = \alpha \dfrac{\omega_{2s}'}{(1 - \lambda)\omega_{2s}' + \lambda} + (1 - \alpha)\omega_{2s}^0$ , where

$\omega_{1s}$ is the coverage weight of the micro base station, $\omega_{2s}$ is the capacity weight of the micro base station, $\omega_{1s}'$ is the previous coverage weight of the micro base station, $\omega_{2s}'$ is the previous capacity weight of the micro base station, $\omega_{1s}^0$ is the initial coverage weight of the micro base station, $\omega_{2s}^0$ is the initial capacity weight of the micro base station, $\lambda$ is determined according to $\left(\dfrac{d_{1s}}{d_{2s}}\right)^{-n} = \lambda$ , $d_{1s}$ is the first distance, $d_{2s}$ is the second distance, and n is an influence coefficient.

With reference to the second aspect or the third implementation manner of the second aspect, in a fourth implementation manner, the obtaining unit is further configured to:

obtain, according to *fitness* = $\varphi \cdot C_{ov} + (1 - \varphi)C_{ap}$, a fitness *fitness* set corresponding to a current group of candidate chromosomes, where one group of candidate chromosomes includes Y candidate chromosomes, and each *fitness* in the *fitness* set corresponds to one candidate chromosome;
if a change value between a greatest *fitness* in the *fitness* set corresponding to the current group of candidate chromosomes and a greatest *fitness* in a *fitness* set corresponding to a previous group of candidate chromosomes is greater than a preset *fitness* change threshold, and a quantity of times a genetic algorithm operation for obtaining the current group of candidate chromosomes is executed meets a preset genetic threshold, the first determining unit is further configured to: select y candidate chromosomes corresponding to y greatest *fitness* in the *fitness* set corresponding to the current group of candidate chromosomes as y paternal chromosomes;
execute the genetic algorithm operation on the y paternal chromosomes to obtain (Y - y) daughter chromosomes; and
obtain a new current group of candidate chromosomes with reference to the y paternal chromosomes and the (Y - y) daughter chromosomes; or
if a change value between a greatest *fitness* in the *fitness* set corresponding to the current group of candidate chromosomes and a greatest *fitness* in a fitness *fitness* set corresponding to the previous group of candidate chromosomes is not greater than a preset *fitness* change threshold, or a quantity of times the genetic algorithm operation is executed reaches a preset genetic threshold, the first determining unit is further configured to determine, as an optimized chromosome, a candidate chromosome corresponding to the greatest *fitness* in the fitness *fitness* set corresponding to the current group of candidate chromosomes; and
the second determining unit is further configured to determine the optimized ABS value for each macro base station according to the optimized chromosome, where
a total quantity of candidate ABS values included by each of the candidate chromosomes is equal to a total quantity of macro base stations; both Y and y are preset positive integers, and Y>y; $C_{ov}$ is a coverage key performance indicator KPI of the communications network; $C_{ap}$ is a capacity KPI of the communications network; when the *fitness* is obtained, values of $C_{ov}$ and $C_{ap}$ that are used are determined by the candidate chromosome corresponding to the *fitness;* and $\varphi$ is a preset normalized weight.

With reference to the fourth implementation manner of the second aspect, in a fifth implementation manner, the second determining unit is specifically configured to:

if the values of $C_{ov}$ and $C_{ap}$ are related to authentic data in the communications network, use each candidate ABS value in the optimized chromosome as an optimized ABS value corresponding to each macro base station; or
if the values of $C_{ov}$ and $C_{ap}$ are related to predicted data in the communications network, determine a corresponding optimized ABS value for each macro base station according to $\beta_{last} = \rho \cdot \beta_m^c + (1 - \rho) \cdot \beta_m^p$, where the predicted data is determined according to the authentic data; and
$\beta_{last}$ represents an optimized ABS value of a macro base station; $\beta_m^c$ represents a candidate ABS value in the optimized chromosome determined by using the authentic data; $\beta_m^p$ represents a candidate ABS value in the optimized chromosome determined by using the predicted data; and $\rho$ is a preset smoothness weight.

According to a third aspect, an embodiment of the present invention provides a communications network optimization processing method, including:

determining, by a micro base station, an optimized CSB value according to a capacity and coverage of the micro base station;
updating, by the micro base station, a current CSB value of the micro base station to the optimized CSB value; and
sending, by the micro base station, the optimized CSB value of the micro base station to at least one terminal.

With reference to the third aspect, in a first implementation manner, before the micro base station updates the current CSB value to the optimized CSB value, the processing method further includes:

sending, by the micro base station, the optimized CSB value to a neighboring micro base station;
receiving, by the micro base station, a current CSB value of the neighboring micro base station;
determining, by the micro base station according to the optimized CSB value of the micro base station and the current CSB value of the neighboring micro base station, an actual situation of a terminal that accesses the micro base station; and
if the actual situation is different from an expected situation, of the terminal that accesses the micro base station, corresponding to the optimized CSB value of the micro base station, determining, by the micro base station, an optimized CSB value.

With reference to the first implementation manner of the third aspect, in a second implementation manner, before the determining, by a micro base station, an optimized CSB value according to a capacity and coverage of the micro base station, the method further includes:
receiving, by the micro base station, parameter information, where the parameter information carries a capacity weight of the micro base station and a coverage weight of the micro base station.
With reference to the second implementation manner of the third aspect, in a third implementation manner, the determining, by a micro base station, an optimized CSB value of the micro base station according to a capacity and coverage of the micro base station includes:

obtaining, by the micro base station, at least one candidate CSB value;
determining, by the micro base station according to $\max 1 = \omega_{1s} C_{ov}^s + \omega_{2s} C_{ap}^s$, a candidate result corresponding to each candidate CSB value; and
using, by the micro base station and as the optimized CSB value of the micro base station, a candidate CSB value corresponding to a greatest candidate result in the candidate result, where
max1 is the candidate result, $\omega_{1s}$ represents the coverage weight of the micro base station, and $\omega_{2s}$ represents the capacity weight of the micro base station; $C_{ov}^s$ is a coverage-related key performance indicator KPI of the micro base station; $C_{ap}^s$ is a capacity-related KPI of the micro base station, $C_{ov}^s = R_s^{z\%-ile}$, and $C_{ap}^s = \sum_e [R_{e,s} \times h(R_{e,s}, R_e^{req})]$; $R_s^{z\%-ile}$ is a mean of association rates, for the micro base station, corresponding to z% terminals in a set $E_s$, and an association rate between any terminal in the z% terminals and the micro base station is not greater than an association rate between any terminal in the set $E_s$ except the z% terminals and the micro base station; a different candidate CSB value corresponds to a different set $E_s$, and z% terminals in the different set $E_s$ correspond to different $R_s^{z\%-ile}$; and e represents any terminal in the set $E_s$, $R_{e,s}$ represents an association rate of the terminal e in the set $E_s$ associated with the micro base station, $R_e^{req}$ is a required rate of the terminal e, and a value of $h(R_{e,s}, R_e^{req})$ is determined according to $h(x, x_0) = \begin{cases} 1, & x \geq x_0 \\ 0, & x < x_0 \end{cases}$.

With reference to the third implementation manner of the third aspect, in a fourth implementation manner, the obtaining, by the micro base station, at least one candidate CSB value includes:

obtaining, by the micro base station, a receive power, for the micro base station, of each terminal of the at least one terminal and a receive power, for a macro base station, of each terminal of the at least one terminal according to a first CSB value;

adding, by the micro base station, the first CSB value and the receive power, for the micro base station, of each terminal of the at least one terminal to obtain a first value corresponding to each terminal of the at least one terminal; determining, by the micro base station and in the at least one terminal according to the first value corresponding to each terminal of the at least one terminal and the receive power, for the macro base station, of each terminal of the at least one terminal, a set $E_s$ corresponding to the first CSB value; and

if determining, according to the set $E_s$ corresponding to the first CSB value, that a load of the micro base station corresponding to the first CSB value is equal to 1, using, by the micro base station, the first CSB value as the candidate CSB value; or

if determining, according to the set $E_s$ corresponding to the first CSB value, that a load of the micro base station corresponding to the first CSB value is less than 1, using, by the micro base station, the first CSB value as the candidate CSB value, and increasing the first CSB value by a preset step to obtain a new first CSB value, until the first CSB value reaches a preset threshold CSB value.

According to a fourth aspect, an embodiment of the present invention provides a communications network optimization processing method, including:

determining, by a network controller, an optimized ABS value for each macro base station;
sending, by the network controller, the corresponding optimized ABS value to each macro base station;
determining, by the network controller, a capacity and coverage for a micro base station according to a current hotspot location and hole location in the communications network; and
sending, by the network controller, an ABS value optimization completion message to the micro base station, where the ABS value optimization completion message carries the capacity and coverage of the micro base station.

With reference to the fourth aspect, in a first implementation manner, there is at least one current hotspot location and at least one current hole location, and the determining, by the network controller, a capacity and coverage for the micro base station according to a current hotspot location and hole location in the communications network includes:

obtaining, by the network controller, a first measured distance between the micro base station and each hotspot location and a second measured distance between the micro base station and each hole location;
determining, by the network controller, a smallest first measured distance in the at least one first measured distance as a first distance, and determining a smallest second measured distance in the at least one second measured distance as a second distance; and
determining, by the network controller, a coverage weight and a capacity weight according to the first distance and the second distance.

With reference to the first implementation manner of the fourth aspect, in a second implementation manner, the determining, by the network controller, the current coverage weight according to the first distance and determining the current capacity weight according to the second distance includes:

if the micro base station is not a planned and deployed network element, determining, by the network controller, the coverage weight according to the first distance, the second distance, and a previous coverage weight, and determining the capacity weight according to the first distance, the second distance, and a previous capacity weight; or
if the micro base station is a planned and deployed network element, determining, by the network controller, the coverage weight according to the first distance, the second distance, a previous coverage weight, and an initial coverage weight, and determining the capacity weight according to the first distance, the second distance, a previous capacity weight, and an initial capacity weight.

With reference to the second implementation manner of the fourth aspect, in a third implementation manner, the determining, by the network controller, the coverage weight according to the first distance, the second distance, and a previous coverage weight, and determining the capacity weight according to the first distance, the second distance, and a previous capacity weight includes:

determining, by the network controller, the coverage weight according to $\omega_{1s} = \dfrac{\lambda \omega'_{1s}}{(\lambda - 1)\omega'_{1s} + 1}$, and determining

the capacity weight according to $\omega_{2s} = \dfrac{\omega'_{2s}}{(1 - \lambda)\omega'_{2s} + \lambda}$; or

the determining, by the network controller, the coverage weight according to the first distance, the second distance, a previous coverage weight, and an initial coverage weight, and determining the capacity weight according to the first distance, the second distance, a previous capacity weight, and an initial capacity weight includes:

determining, by the network controller, the coverage weight according to $\omega_{1s} = \alpha \dfrac{\lambda \omega_{1s}'}{(\lambda - 1)\omega_{1s}' + 1} + (1 - \alpha)\omega_{1s}^0$ ,

and determining the capacity weight according to $\omega_{2s} = \alpha \dfrac{\omega_{2s}'}{(1 - \lambda)\omega_{2s}' + \lambda} + (1 - \alpha)\omega_{2s}^0$, where

$\omega_{1s}$ is the coverage weight of the micro base station, $\omega_{2s}$ is the capacity weight of the micro base station, $\omega_{1s}'$ is the previous coverage weight of the micro base station, $\omega_{2s}'$ is the previous capacity weight of the micro base station, $\omega_{1s}^0$ is the initial coverage weight of the micro base station, $\omega_{2s}^0$ is the initial capacity weight of the micro base station, $\lambda$ is determined according to $\left(\dfrac{d_{1s}}{d_{2s}}\right)^{-n} = \lambda$ , $d_{1s}$ is the first distance, $d_{2s}$ is the second distance, and n is an influence coefficient.

With reference to the fourth aspect or the third implementation manner of the fourth aspect, in a fourth implementation manner, the determining, by a network controller, an optimized ABS value for each macro base station includes:

obtaining, by the network controller according to *fitness* = $\varphi \cdot C_{ov}$ + (1 - $\varphi)C_{ap}$, a fitness *fitness* set corresponding to a current group of candidate chromosomes, where one group of candidate chromosomes includes Y candidate chromosomes, and each *fitness* in the *fitness* set corresponds to one candidate chromosome;
if a change value between a greatest *fitness* in the *fitness* set corresponding to the current group of candidate chromosomes and a greatest *fitness* in a *fitness* set corresponding to a previous group of candidate chromosomes is greater than a preset *fitness* change threshold, and a quantity of times a genetic algorithm operation for obtaining the current group of candidate chromosomes is executed meets a preset genetic threshold, selecting y candidate chromosomes corresponding to y greatest *fitness* in the *fitness* set corresponding to the current group of candidate chromosomes as y paternal chromosomes;
executing, by the network controller, the genetic algorithm operation on the y paternal chromosomes to obtain (Y - y) daughter chromosomes; and
obtaining, by the network controller, a new current group of candidate chromosomes with reference to the y paternal chromosomes and the (Y - y) daughter chromosomes; or
if a change value between a greatest *fitness* in the *fitness* set corresponding to the current group of candidate chromosomes and a greatest *fitness* in a fitness *fitness* set corresponding to the previous group of candidate chromosomes is not greater than a preset *fitness* change threshold, or a quantity of times the genetic algorithm operation is executed reaches a preset genetic threshold, determining, by the network controller and as an optimized chromosome, a candidate chromosome corresponding to the greatest *fitness* in the fitness *fitness* set corresponding to the current group of candidate chromosomes; and
determining, by the network controller, the optimized ABS value for each macro base station according to the optimized chromosome, where
a total quantity of candidate ABS values included by each of the candidate chromosomes is equal to a total quantity of macro base stations; both Y and y are preset positive integers, and Y>y; $C_{ov}$ is a coverage key performance indicator KPI of the communications network; $C_{ap}$ is a capacity KPI of the communications network; when the *fitness* is obtained, values of $C_{ov}$ and $C_{ap}$ that are used are determined by the candidate chromosome corresponding to the *fitness;* and $\varphi$ is a preset normalized weight.

With reference to the fourth implementation manner of the fourth aspect, in a fifth implementation manner, the determining, by the network controller, the optimized ABS value for each macro base station according to the optimized chromosome includes:

if the values of $C_{ov}$ and $C_{ap}$ are related to authentic data in the communications network, using, by the network controller, each candidate ABS value in the optimized chromosome as an optimized ABS value corresponding to each macro base station; or
if the values of $C_{ov}$ and $C_{ap}$ are related to predicted data in the communications network, determining, by the network controller, a corresponding optimized ABS value for each macro base station according to

$$\beta_{last} = \rho \cdot \beta_m^c + (1 - \rho) \cdot \beta_m^p$$ , where the predicted data is determined according to the authentic data; and $\beta_{last}$ represents an optimized ABS value of a macro base station; $\beta_m^c$ represents a candidate ABS value in the optimized chromosome determined by using the authentic data; $\beta_m^p$ represents a candidate ABS value in the optimized chromosome determined by using the predicted data; and $\rho$ is a preset smoothness weight.

According to the communications network optimization processing method and the device that are provided by the embodiments of the present invention, a CSB value of a micro base station is adjusted by the micro base station; the micro base station can adjust the CSB value in a timely way according to a dynamic change of a communications network, so as to effectively optimize the communications network. Compared with the prior art, in the embodiments, because CSB value adjustment is no longer controlled by a network controller, a CSB value adjustment frequency of the micro base station does not need to be remained the same as an ABS value adjustment frequency; the micro base station can adjust the CSB value at a relatively small time interval to optimize the dynamically changed communications network in a timely way, avoiding enormous signaling overheads. In addition, a capacity and coverage of the micro base station are considered during communications network optimization, so that network hotspot and coverage hole problems that are caused by a dynamic load change of a terminal in the communications network can be resolved effectively, facilitating performance improvement of the communications network.

## BRIEF DESCRIPTION OF DRAWINGS

To describe the technical solutions in the embodiments of the present invention or in the prior art more clearly, the following briefly describes the accompanying drawings required for describing the embodiments or the prior art.

FIG. 1 is a schematic diagram of a communications network in the prior art;
FIG. 2 is a structural diagram of Embodiment 1 of a micro base station according to the present invention;
FIG. 3 is a structural diagram of Embodiment 2 of a micro base station according to the present invention;
FIG. 4 is a structural diagram of Embodiment 3 of a micro base station according to the present invention;
FIG. 5 is a structural diagram of Embodiment 4 of a micro base station according to the present invention;
FIG. 6 is a structural diagram of Embodiment 1 of a network controller according to the present invention;
FIG. 7 is a structural diagram of Embodiment 2 of a network controller according to the present invention;
FIG. 8 is a structural diagram of Embodiment 3 of a network controller according to the present invention;
FIG. 9 is a flowchart of Embodiment 1 of a communications network optimization processing method according to the present invention;
FIG. 10 is a flowchart of Embodiment 2 of a communications network optimization processing method according to the present invention;
FIG. 11 is a flowchart of Embodiment 3 of a communications network optimization processing method according to the present invention;
FIG. 12 is a flowchart of Embodiment 4 of a communications network optimization processing method according to the present invention; and
FIG. 13 is a flowchart of Embodiment 5 of a communications network optimization processing method according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.
FIG. 2 is a structural diagram of Embodiment 1 of a micro base station according to the present invention. As shown in FIG. 2, the micro base station in this embodiment is specifically a micro base station 20 in FIG. 1. The micro base station includes:

a determining module 21, configured to determine an optimized CSB value according to a capacity and coverage of the micro base station;
an update module 22, configured to update a current CSB value of the micro base station to the optimized CSB value; and
a sending module 23, configured to send the optimized CSB value of the micro base station to at least one terminal.

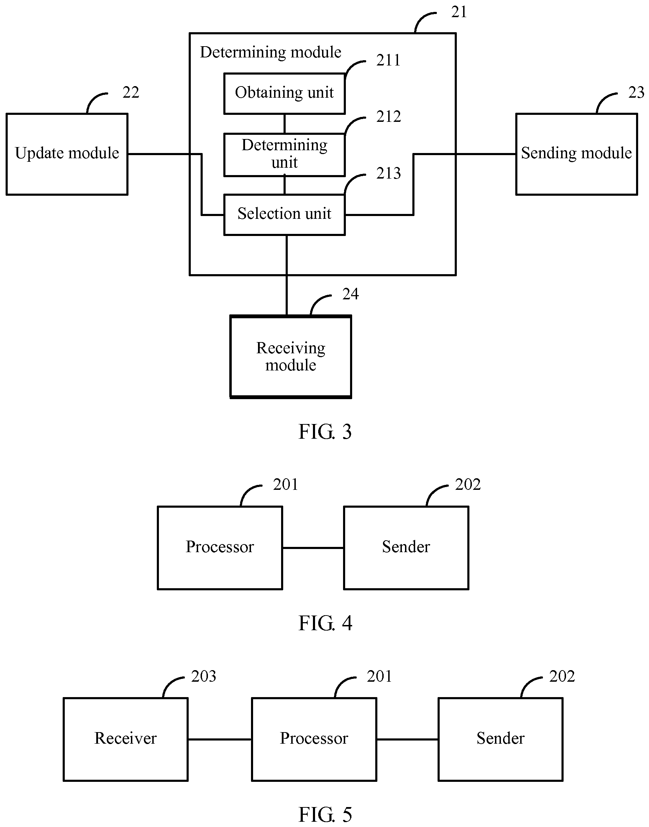

In this embodiment, a CSB value of a micro base station is adjusted by the micro base station; the micro base station can adjust the CSB value in a timely way according to a dynamic change of a communications network, so as to effectively optimize the communications network. Compared with the prior art, in this embodiment, because CSB value adjustment is no longer controlled by a network controller, a CSB value adjustment frequency of the micro base station does not need to be remained the same as an ABS value adjustment frequency; the micro base station can adjust the CSB value at a relatively small time interval to optimize the dynamically changed communications network in a timely way, avoiding enormous signaling overheads. In addition, a capacity and coverage of the micro base station are considered during communications network optimization, so that network hotspot and coverage hole problems that are caused by a dynamic load change of a terminal in the communications network can be resolved effectively, facilitating performance improvement of the communications network. FIG. 3 is a structural diagram of Embodiment 2 of a micro base station according to the present invention. As shown in FIG. 3, this embodiment provides further descriptions on a basis of the micro base station shown in FIG. 2. Specifically, a receiving module 24 is further included.

The sending module 23 is further configured to send the optimized CSB value to a neighboring micro base station.

The receiving module 24 is configured to receive a current CSB value of the neighboring micro base station.

The determining module 21 is further configured to determine, according to the optimized CSB value of the micro base station and the current CSB value of the neighboring micro base station, an actual situation of a terminal that accesses the micro base station.

If the actual situation is different from an expected situation, of the terminal that accesses the micro base station, corresponding to the optimized CSB value of the micro base station, the determining module 21 is configured to determine an optimized CSB value.

Further, the receiving module 24 is further configured to receive parameter information. The parameter information carries a capacity weight of the micro base station and a coverage weight of the micro base station.

Further, the determining module 21 specifically includes:

an obtaining unit 211, configured to obtain at least one candidate CSB value;

a determining unit 212, configured to determine, according to $\max 1 = \omega_{1s} C_{ov}^{s} + \omega_{2s} C_{ap}^{s}$, max1 a candidate result corresponding to each candidate CSB value; and

a selection unit 213, configured to use, as the optimized CSB value of the micro base station, a candidate CSB value corresponding to a greatest candidate result in the candidate result, where

max1 is the candidate result, $\omega_{1s}$ represents the coverage weight of the micro base station, and $\omega_{2s}$ represents the capacity weight of the micro base station; $C_{ov}^{s}$ is a coverage-related KPI (Key Performance Indicator, key performance indicator) of the micro base station; $C_{ap}^{s}$ is a capacity-related KPI of the micro base station, $C_{ov}^{s} = R_{s}^{z\%-ile}$, and

$$C_{ap}^{s} = \sum_{e}[R_{e,s} \times h(R_{e,s}, R_{e}^{req})];$$ $R_{s}^{z\%-ile}$ is a mean of association rates, for the micro base station, corresponding to z% terminals in a set $E_s$, and an association rate between any terminal in the z% terminals and the micro base station is not greater than an association rate between any terminal in the set $E_s$ except the z% terminals and the micro base station; a different candidate CSB value corresponds to a different set $E_s$, and z% terminals in the different set $E_s$ correspond to different $R_{s}^{z\%-ile}$; and e represents any terminal in the set $E_s$, $R_{e,s}$ represents an association rate of the terminal e in the set $E_s$ associated with the micro base station, $R_{e}^{req}$ is a required rate of the terminal e, and a value of $h(R_{e,s}, R_{e}^{req})$ is determined according to $h(x, x_0) = \begin{cases} 1, & x \geq x_0 \\ 0, & x < x_0 \end{cases}$.

Specifically, the obtaining unit 211 is specifically configured to:

obtain a receive power, for the micro base station, of each terminal of the at least one terminal and a receive power, for a macro base station, of each terminal of the at least one terminal according to a first CSB value;

add the first CSB value and the receive power, for the micro base station, of each terminal of the at least one terminal to obtain a first value corresponding to each terminal of the at least one terminal;

determine, in the at least one terminal according to the first value corresponding to each terminal of the at least one terminal and the receive power, for the macro base station, of each terminal of the at least one terminal, a set $E_s$ corresponding to the first CSB value; and

if it is determined, according to the set $E_s$ corresponding to the first CSB value, that a load of the micro base station corresponding to the first CSB value is equal to 1, use the first CSB value as the candidate CSB value; or

if it is determined, according to the set $E_s$ corresponding to the first CSB value, that a load of the micro base station corresponding to the first CSB value is less than 1, use the first CSB value as the candidate CSB value, and increase the first CSB value by a preset step to obtain a new first CSB value, until the first CSB value reaches a preset threshold CSB value.

In this embodiment, a CSB value of a micro base station is adjusted by the micro base station; the micro base station can adjust the CSB value in a timely way according to a dynamic change of a communications network, so as to effectively optimize the communications network. Compared with the prior art, in this embodiment, because CSB value adjustment is no longer controlled by a network controller, a CSB value adjustment frequency of the micro base station does not need to be remained the same as an ABS value adjustment frequency; the micro base station can adjust the CSB value at a relatively small time interval to optimize the dynamically changed communications network in a timely way, avoiding enormous signaling overheads. In addition, a capacity and coverage of the micro base station are considered during communications network optimization, so that network hotspot and coverage hole problems that are caused by a dynamic load change of a terminal in the communications network can be resolved effectively, facilitating performance improvement of the communications network.

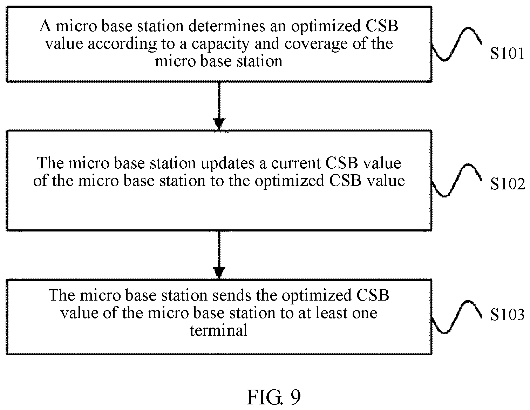

It should be noted that modules of the micro base stations shown in FIG. 2 and FIG. 3 are specifically configured to execute steps in method embodiments shown in FIG. 9, FIG. 10, and FIG. 13. For specific execution processes and beneficial effects, refer to descriptions in the following method embodiments.

FIG. 4 is a structural diagram of Embodiment 3 of a micro base station according to the present invention. As shown in FIG. 4, the micro base station in this embodiment may be a micro base station 20 in FIG. 1. The micro base station includes:

a processor 201, configured to: determine an optimized CSB value according to a capacity and coverage of the micro base station; and
update a current CSB value of the micro base station to the optimized CSB value; and
a sender 202, configured to send the optimized CSB value of the micro base station to at least one terminal.

In this embodiment, a CSB value of a micro base station is adjusted by the micro base station; the micro base station can adjust the CSB value in a timely way according to a dynamic change of a communications network, so as to effectively optimize the communications network. Compared with the prior art, in this embodiment, because CSB value adjustment is no longer controlled by a network controller, a CSB value adjustment frequency of the micro base station does not need to be remained the same as an ABS value adjustment frequency; the micro base station can adjust the CSB value at a relatively small time interval to optimize the dynamically changed communications network in a timely way, avoiding enormous signaling overheads. In addition, a capacity and coverage of the micro base station are considered during communications network optimization, so that network hotspot and coverage hole problems that are caused by a dynamic load change of a terminal in the communications network can be resolved effectively, facilitating performance improvement of the communications network.

FIG. 5 is a structural diagram of Embodiment 4 of a micro base station according to the present invention. As shown in FIG. 5, this embodiment provides further descriptions on a basis of the micro base station shown in FIG. 4. Specifically, a receiver 203 is further included.

The sender 202 is further configured to send the optimized CSB value to a neighboring micro base station.

The receiver 203 is configured to receive a current CSB value of the neighboring micro base station.

The processor 201 is further configured to determine, according to the optimized CSB value of the micro base station and the current CSB value of the neighboring micro base station, an actual situation of a terminal that accesses the micro base station.

If the actual situation is different from an expected situation, of the terminal that accesses the micro base station, corresponding to the optimized CSB value of the micro base station, the processor 201 is configured to determine an optimized CSB value.

Further, the receiver 203 is further configured to receive parameter information. The parameter information carries a capacity weight of the micro base station and a coverage weight of the micro base station.

Further, the processor 201 is specifically configured to: obtain at least one candidate CSB value;

determine, according to $\max 1 = \omega_{1s} C_{ov}^s + \omega_{2s} C_{ap}^s$, max1 a candidate result corresponding to each candidate CSB value; and

use, as the optimized CSB value of the micro base station, a candidate CSB value corresponding to a greatest candidate result in the candidate result, where

max1 is the candidate result, $\omega_{1s}$ represents the coverage weight of the micro base station, and $\omega_{2s}$ represents the

capacity weight of the micro base station; $C_{ov}^s$ is a coverage-related key performance indicator KPI of the micro base station; $C_{ap}^s$ is a capacity-related KPI of the micro base station, $C_{ov}^s = R_s^{z\%-ile}$, and $C_{ap}^s = \sum_e [R_{e,s} \times h(R_{e,s}, R_e^{req})]$; $R_s^{z\%-ile}$ is a mean of association rates, for the micro base station, corresponding to z% terminals in a set $E_s$, and an association rate between any terminal in the z% terminals and the micro base station is not greater than an association rate between any terminal in the set $E_s$ except the z% terminals and the micro base station; a different candidate CSB value corresponds to a different set $E_s$, and z% terminals in the different set $E_s$ correspond to different $R_s^{z\%-ile}$; and e represents any terminal in the set $E_s$, $R_{e,s}$ represents an association rate of the terminal e in the set $E_s$ associated with the micro base station, $R_e^{req}$ is a required rate of the terminal e, and a value of $h(R_{e,s}, R_e^{req})$ is determined according to $h(x,x_0) = \begin{cases} 1, & x \geq x_0 \\ 0, & x < x_0 \end{cases}$.

Further, when obtaining the at least one candidate CSB value, the processor 201 is specifically configured to: obtain a receive power, for the micro base station, of each terminal of the at least one terminal and a receive power, for a macro base station, of each terminal of the at least one terminal according to a first CSB value;

add the first CSB value and the receive power, for the micro base station, of each terminal of the at least one terminal to obtain a first value corresponding to each terminal of the at least one terminal;
determine, in the at least one terminal according to the first value corresponding to each terminal of the at least one terminal and the receive power, for the macro base station, of each terminal of the at least one terminal, a set $E_s$ corresponding to the first CSB value; and
if it is determined, according to the set $E_s$ corresponding to the first CSB value, that a load of the micro base station corresponding to the first CSB value is equal to 1, use the first CSB value as the candidate CSB value; or
if it is determined, according to the set $E_s$ corresponding to the first CSB value, that a load of the micro base station corresponding to the first CSB value is less than 1, use the first CSB value as the candidate CSB value, and increase the first CSB value by a preset step to obtain a new first CSB value, until the first CSB value reaches a preset threshold CSB value.

In this embodiment, a CSB value of a micro base station is adjusted by the micro base station; the micro base station can adjust the CSB value in a timely way according to a dynamic change of a communications network, so as to effectively optimize the communications network. Compared with the prior art, in this embodiment, because CSB value adjustment is no longer controlled by a network controller, a CSB value adjustment frequency of the micro base station does not need to be remained the same as an ABS value adjustment frequency; the micro base station can adjust the CSB value at a relatively small time interval to optimize the dynamically changed communications network in a timely way, avoiding enormous signaling overheads. In addition, a capacity and coverage of the micro base station are considered during communications network optimization, so that network hotspot and coverage hole problems that are caused by a dynamic load change of a terminal in the communications network can be resolved effectively, facilitating performance improvement of the communications network.
It should be noted that devices of the micro base stations shown in FIG. 4 and FIG. 5 are specifically configured to execute steps in method embodiments shown in FIG. 9, FIG. 10, and FIG. 13. For specific execution processes and beneficial effects, refer to descriptions in the following method embodiments.

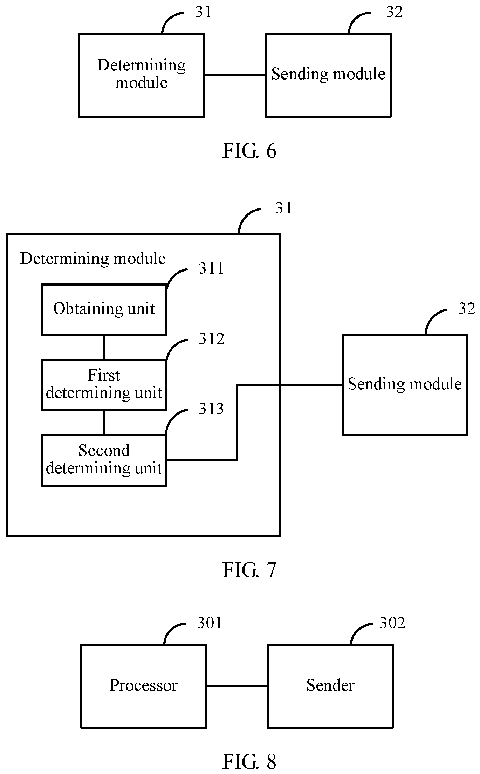

FIG. 6 is a structural diagram of Embodiment 1 of a network controller according to the present invention. As shown in FIG. 6, the network controller in this embodiment may be a network controller 30 in FIG. 1, or may be a macro base station integrating a function of a network controller. The network controller in this embodiment includes:

a determining module 31, configured to determine an optimized ABS value for each macro base station; and
a sending module 32, configured to send the corresponding optimized ABS value to each macro base station.

The determining module 31 is further configured to determine a capacity and coverage for a micro base station according to a current hotspot location and hole location in the communications network.
The sending module 32 is further configured to send an ABS value optimization completion message to the micro base station, where the ABS value optimization completion message carries the capacity and coverage of the micro base station.
In this embodiment, a network controller determines a capacity and coverage for each micro base station after adjusting an ABS value of each macro base station by using an optimized ABS value, so that each micro base station can optimize a communications network in an area-based way with reference to the capacity and coverage, effectively resolving network hotspot and coverage hole problems that are caused by a dynamic communications network change of the communications network.

FIG. 7 is a structural diagram of Embodiment 2 of a network controller according to the present invention. As shown in FIG. 7, this embodiment provides further descriptions on a basis of the embodiment shown in FIG. 6. Specifically, there is at least one current hotspot location and at least one current hole location, and the determining module 31 specifically includes:

an obtaining unit 311, configured to obtain a first measured distance between the micro base station and each hotspot location and a second measured distance between the micro base station and each hole location;
a first determining unit 312, configured to: determine a smallest first measured distance in the at least one first measured distance as a first distance, and determine a smallest second measured distance in the at least one second measured distance as a second distance; and
a second determining unit 313, configured to determine a coverage weight and a capacity weight according to the first distance and the second distance.

Further, the second determining unit 313 is specifically configured to:

if the micro base station is not a planned and deployed network element, determine the coverage weight according to the first distance, the second distance, and a previous coverage weight, and determine the capacity weight according to the first distance, the second distance, and a previous capacity weight; or
if the micro base station is a planned and deployed network element, determine the coverage weight according to the first distance, the second distance, a previous coverage weight, and an initial coverage weight, and determine the capacity weight according to the first distance, the second distance, a previous capacity weight, and an initial capacity weight.

Specifically, if the micro base station is not a planned and deployed network element, the second determining unit 313 is specifically configured to:

determine the coverage weight according to $\omega_{1s} = \dfrac{\lambda \omega_{1s}'}{(\lambda - 1)\omega_{1s}' + 1}$ , and determine the capacity weight according

to $\omega_{2s} = \dfrac{\omega_{2s}'}{(1 - \lambda)\omega_{2s}' + \lambda}$ ; or

if the micro base station is a planned and deployed network element, the second determining unit is specifically configured to: determine the coverage weight according to $\omega_{1s} = \alpha \dfrac{\lambda \omega_{1s}'}{(\lambda - 1)\omega_{1s}' + 1} + (1 - \alpha)\omega_{1s}^0$ , and deter-

mine the capacity weight according to $\omega_{2s} = \alpha \dfrac{\omega_{2s}'}{(1 - \lambda)\omega_{2s}' + \lambda} + (1 - \alpha)\omega_{2s}^0$ , where

$\omega_{1s}$ is the coverage weight of the micro base station, $\omega_{2s}$ is the capacity weight of the micro base station, $\omega_{1s}'$ is the

previous coverage weight of the micro base station, $\omega_{2s}'$ is the previous capacity weight of the micro base station,

$\omega_{1s}^0$ is the initial coverage weight of the micro base station, $\omega_{2s}^0$ is the initial capacity weight of the micro base station,

$\lambda$ is determined according to $(\dfrac{d_{1s}}{d_{2s}})^{-n} = \lambda$ , $d_{1s}$ is the first distance, $d_{2s}$ is the second distance, and n is an influence coefficient.

Further, the obtaining unit 313 is further configured to:
obtain, according to $fitness = \varphi \cdot C_{ov} + (1 - \varphi)C_{ap}$, a fitness *fitness* set corresponding to a current group of candidate chromosomes, where one group of candidate chromosomes includes Y candidate chromosomes, and each *fitness* in the *fitness* set corresponds to one candidate chromosome.
If a change value between a greatest *fitness* in the *fitness* set corresponding to the current group of candidate chromosomes and a greatest *fitness* in a *fitness* set corresponding to a previous group of candidate chromosomes is greater than a preset *fitness* change threshold, and a quantity of times a genetic algorithm operation for obtaining the current group of candidate chromosomes is executed meets a preset genetic threshold, the first determining unit 312 is further configured to: select y candidate chromosomes corresponding to y greatest *fitness* in the *fitness* set corresponding to the current group of candidate chromosomes as y paternal chromosomes;

execute the genetic algorithm operation on the y paternal chromosomes to obtain (Y - y) daughter chromosomes; and obtain a new current group of candidate chromosomes with reference to the y paternal chromosomes and the (Y - y) daughter chromosomes.

If a change value between a greatest *fitness* in the *fitness* set corresponding to the current group of candidate chromosomes and a greatest *fitness* in a fitness *fitness* set corresponding to the previous group of candidate chromosomes is not greater than a preset *fitness* change threshold, or a quantity of times the genetic algorithm operation is executed reaches a preset genetic threshold, the first determining unit 312 is further configured to determine, as an optimized chromosome, a candidate chromosome corresponding to the greatest *fitness* in the fitness *fitness* set corresponding to the current group of candidate chromosomes.

The second determining unit 313 is further configured to determine the optimized ABS value for each macro base station according to the optimized chromosome, where a total quantity of candidate ABS values included by each of the candidate chromosomes is equal to a total quantity of macro base stations; both Y and y are preset positive integers, and Y>y; $C_{ov}$ is a coverage key performance indicator KPI of the communications network; $C_{ap}$ is a capacity KPI of the communications network; when the *fitness* is obtained, values of $C_{ov}$ and $C_{ap}$ that are used are determined by the candidate chromosome corresponding to the *fitness;* and $\varphi$ is a preset normalized weight.

Further, the second determining unit 313 is specifically configured to:

if the values of $C_{ov}$ and $C_{ap}$ are related to authentic data in the communications network, use each candidate ABS value in the optimized chromosome as an optimized ABS value corresponding to each macro base station; or if the values of $C_{ov}$ and $C_{ap}$ are related to predicted data in the communications network, determine a corresponding optimized ABS value for each macro base station according to $\beta_{last} = \rho \cdot \beta_m^c + (1 - \rho) \cdot \beta_m^p$, where the predicted data is determined according to the authentic data; and $\beta_{last}$ represents an optimized ABS value of a macro base station; $\beta_m^c$ represents a candidate ABS value in the optimized chromosome determined by using the authentic data; $\beta_m^p$ represents a candidate ABS value in the optimized chromosome determined by using the predicted data; and $\rho$ is a preset smoothness weight.

In this embodiment, a network controller determines an optimized ABS value for each macro base station by means of a genetic algorithm operation, so that performance of a communications network is optimized in a global scope; and determines a current capacity weight and a current coverage weight for each micro base station after adjusting an ABS value of each macro base station by using the optimized ABS value, so that each micro base station can optimize the communications network in an area-based way with reference to a respective current capacity weight and current coverage weight according to a respective characteristic, effectively resolving network hotspot and coverage hole problems that are caused by a dynamic communications network change of the communications network.

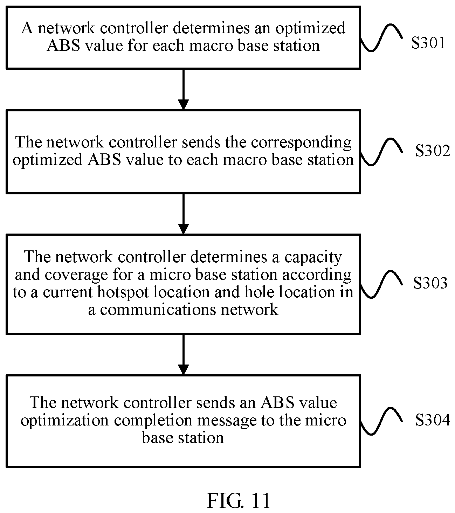

It should be noted that modules of the network controllers shown in FIG. 6 and FIG. 7 are specifically configured to execute steps in method embodiments shown in FIG. 11 to FIG. 13. For specific execution processes and beneficial effects, refer to descriptions in the following method embodiments.

FIG. 8 is a structural diagram of Embodiment 3 of a network controller according to the present invention. As shown in FIG. 8, the network controller in this embodiment may be a network controller 30 in FIG. 1, or may be a macro base station integrating a function of a network controller. The network controller in this embodiment includes:

a processor 301, configured to determine an optimized ABS value for each macro base station; and a sender 302, configured to send the corresponding optimized ABS value to each macro base station.

The processor 301 is further configured to determine a capacity and coverage for a micro base station according to a current hotspot location and hole location in a communications network. The sender 302 is further configured to send an ABS value optimization completion message to the micro base station, where the ABS value optimization completion message carries the capacity and coverage of the micro base station.

Further, there is at least one current hotspot location and at least one current hole location, and the processor 301 is specifically configured to: obtain a first measured distance between the micro base station and each hotspot location and a second measured distance between the micro base station and each hole location;

determine a smallest first measured distance in the at least one first measured distance as a first distance, and determine a smallest second measured distance in the at least one second measured distance as a second distance; and
determine a coverage weight and a capacity weight according to the first distance and the second distance.

Further, if the micro base station is not a planned and deployed network element, the processor 301 determines the coverage weight according to the first distance, the second distance, and a previous coverage weight, and determines the capacity weight according to the first distance, the second distance, and a previous capacity weight; or
if the micro base station is a planned and deployed network element, the processor 301 determines the coverage weight according to the first distance, the second distance, a previous coverage weight, and an initial coverage weight, and determines the capacity weight according to the first distance, the second distance, a previous capacity weight, and an initial capacity weight.
Specifically, if the micro base station is not a planned and deployed network element, the processor 301 is specifically configured to:

determine the coverage weight according to $\omega_{1s} = \dfrac{\lambda \omega_{1s}'}{(\lambda - 1)\omega_{1s}' + 1}$ , and determine the capacity weight according to

$\omega_{2s} = \dfrac{\omega_{2s}'}{(1 - \lambda)\omega_{2s}' + \lambda}$ .

If the micro base station is a planned and deployed network element, the processor 301 is specifically configured to: determine the coverage weight according to $\omega_{1s} = \alpha \dfrac{\lambda \omega_{1s}'}{(\lambda - 1)\omega_{1s}' + 1} + (1 - \alpha)\omega_{1s}^{0}$ , and determine the capacity

weight according to $\omega_{2s} = \alpha \dfrac{\omega_{2s}'}{(1 - \lambda)\omega_{2s}' + \lambda} + (1 - \alpha)\omega_{2s}^{0}$ , where

$\omega_{1s}$ is the coverage weight of the micro base station, $\omega_{2s}$ is the capacity weight of the micro base station, $\omega_{1s}'$ is the previous coverage weight of the micro base station, $\omega_{2s}'$ is the previous capacity weight of the micro base station, $\omega_{1s}^{0}$ is the initial coverage weight of the micro base station, $\omega_{2s}^{0}$ is the initial capacity weight of the micro base station, $\lambda$ is

determined according to $(\dfrac{d_{1s}}{d_{2s}})^{-n} = \lambda$ , $d_{1s}$ is the first distance, $d_{2s}$ is the second distance, and n is an influence coefficient.
Further, the processor 301 is further configured to:
obtain, according to *fitness* = $\varphi \cdot C_{ov}$ + (1 - $\varphi)C_{ap}$, a fitness *fitness* set corresponding to a current group of candidate chromosomes, where one group of candidate chromosomes includes Y candidate chromosomes, and each *fitness* in the *fitness* set corresponds to one candidate chromosome.
If a change value between a greatest *fitness* in the *fitness* set corresponding to the current group of candidate chromosomes and a greatest *fitness* in a *fitness* set corresponding to a previous group of candidate chromosomes is greater than a preset *fitness* change threshold, and a quantity of times a genetic algorithm operation for obtaining the current group of candidate chromosomes is executed meets a preset genetic threshold, the processor 301 is further configured to: select y candidate chromosomes corresponding to y greatest *fitness* in the *fitness* set corresponding to the current group of candidate chromosomes as y paternal chromosomes;

execute the genetic algorithm operation on the y paternal chromosomes to obtain (Y - y) daughter chromosomes; and
obtain a new current group of candidate chromosomes with reference to the y paternal chromosomes and the (Y - y) daughter chromosomes.

If a change value between a greatest *fitness* in the *fitness* set corresponding to the current group of candidate chromosomes and a greatest *fitness* in a fitness *fitness* set corresponding to the previous group of candidate chromosomes is not greater than a preset *fitness* change threshold, or a quantity of times the genetic algorithm operation is executed reaches a preset genetic threshold, the processor 301 is further configured to determine, as an optimized chromosome, a candidate chromosome corresponding to the greatest *fitness* in the fitness *fitness* set corresponding to the current group of candidate chromosomes.

The processor 301 is further configured to determine the optimized ABS value for each macro base station according to the optimized chromosome, where

a total quantity of candidate ABS values included by each of the candidate chromosomes is equal to a total quantity of macro base stations; both Y and y are preset positive integers, and Y>y; $C_{ov}$ is a coverage key performance indicator KPI of the communications network; $C_{ap}$ is a capacity KPI of the communications network; when the *fitness* is obtained, values of $C_{ov}$ and $C_{ap}$ that are used are determined by the candidate chromosome corresponding to the *fitness;* and $\varphi$ is a preset normalized weight.

Further, the processor 301 is specifically configured to:

if the values of $C_{ov}$ and $C_{ap}$ are related to authentic data in the communications network, use each candidate ABS value in the optimized chromosome as an optimized ABS value corresponding to each macro base station; or
if the values of $C_{ov}$ and $C_{ap}$ are related to predicted data in the communications network, determine a corresponding optimized ABS value for each macro base station according to $\beta_{last} = \rho \cdot \beta_m^c + (1 - \rho) \cdot \beta_m^p$, where the predicted data is determined according to the authentic data; and
$\beta_{last}$ represents an optimized ABS value of a macro base station; $\beta_m^c$ represents a candidate ABS value in the optimized chromosome determined by using the authentic data; $\beta_m^p$ represents a candidate ABS value in the optimized chromosome determined by using the predicted data; and $\rho$ is a preset smoothness weight.

In this embodiment, a network controller determines an optimized ABS value for each macro base station by means of a genetic algorithm operation, so that performance of a communications network is optimized in a global scope; and determines a current capacity weight and a current coverage weight for each micro base station after adjusting an ABS value of each macro base station by using the optimized ABS value, so that each micro base station can optimize the communications network in an area-based way with reference to a respective current capacity weight and current coverage weight according to a respective characteristic, effectively resolving network hotspot and coverage hole problems that are caused by a dynamic communications network change of the communications network.

It should be noted that devices of the network controllers shown in FIG. 8 are specifically configured to execute steps in method embodiments shown in FIG. 11 to FIG. 13. For specific execution processes and beneficial effects, refer to descriptions in the following method embodiments.

FIG. 9 is a flowchart of Embodiment 1 of a communications network optimization processing method according to the present invention. As shown in FIG. 9, this embodiment is executed by a communications network optimization processing apparatus. The processing apparatus may be implemented in a software and/or hardware manner. Preferably, the processing apparatus is integrated into the micro base station shown in FIG. 1, and this embodiment can be applied to the communications network shown in FIG. 1. It can be understood that there are multiple micro base stations in the communications network, and each micro base station needs to adjust a CSB value in a timely way along with a dynamic change of the communications network. However, in this embodiment, descriptions are provided from a perspective of one micro base station, which are specifically:

S101: The micro base station determines an optimized CSB value according to a capacity and coverage of the micro base station.

The optimized CSB value is used to optimize the communications network in which the micro base station is located.

In this embodiment, the micro base station determines the optimized CSB value with reference to the capacity and coverage, which can effectively resolve network hotspot and coverage hole problems that are caused by a dynamic load change of a terminal in the communications network.

More specifically, in order that the micro base station adjusts the CSB value in a timely way to effectively optimize the communications network, in an actual application, optionally, S101 is executed immediately after a network controller in the communications network sends an ABS value optimization completion message to the micro base station. That is, after completing adjustment of an ABS value that greatly affects the communications network, the network controller further controls, by using the ABS value optimization completion message, the micro base station to start to adjust the CSB value.

Alternatively, when a length of time recorded on a timer of the micro base station reaches a preset length of time, the micro base station starts to execute S101. That is, in order that a CSB value adjustment frequency matches a dynamic change of the communications network, the micro base station starts the timer of the micro base station after previous CSB value adjustment, and starts to execute S101 after the length of time recorded on the timer reaches the preset length of time.

Alternatively, when a load change value of the micro base station exceeds a preset load change threshold, the micro base station starts to execute S101. Specifically, the micro base station collects, at a current moment according to $load_s = \sum\limits_{u \in U_s} \dfrac{d_u}{R_{u,s}}$, statistics about a load borne by the micro base station at the current moment, where s represents the micro base station, $load_s$ is the load borne by the micro base station at the current moment, and $U_s$ is a set of all terminals that access the micro base station at the current moment; u represents any terminal in $U_s$, $d_u$ represents a service requirement of the terminal u, and $R_{u,s}$ is an association rate between the terminal u and the micro base station. Then, the micro base station calculates a change value between the load $load_s$ on which statistics are collected by the micro base station at the current moment and a load on which statistics are collected before the current moment, and starts to execute S101 if the change value reaches the load change threshold.

For example, the network controller adjusts an ABS value of each macro base station in the communications network at an initial moment, leading to optimization of the communications network in a global scope; and sends an ABS value optimization completion message to the micro base station, to control the micro base station to adjust the CSB value according to the ABS value adjusted at the initial moment. When the micro base station is to adjust the CSB value, the micro base station starts a timer, and service traffic required by a terminal in the communications network and an environment factor always change dynamically as time goes by. In this case, when a length of time, between the initial moment and a current moment t1, recorded on the timer of the micro base station reaches a preset length of time, even if the network controller determines that the ABS value does not need to be adjusted yet at this moment, the micro base station starts to adjust the CSB value to resolve a problem in the dynamically changed communications network in a timely way. Alternatively, when the network controller determines that an ABS value does not need to be adjusted and after the micro base station adjusts the CSB value before a current moment, because a quantity of terminals that access the micro base station in the communications network changes or service traffic requested by terminals increases, the terminals cannot obtain, after choosing to access the micro base station according to a CSB value currently used by the micro base station, a better service by using the micro base station. In this case, performance of the communications network is relatively poor. Therefore, when detecting that a load change value reaches a preset load change threshold at the current moment, the micro base station starts to adjust the CSB value to optimize the communications network.

S102: The micro base station updates a current CSB value of the micro base station to the optimized CSB value.

S103: The micro base station sends the optimized CSB value of the micro base station to at least one terminal.

After the terminal in the communications network receives the optimized CSB value sent by the micro base station, the terminal may determine, according to the optimized CSB value, whether to access the micro base station.

For example, the micro base station is a micro base station in the communications network; another micro base station in the communications network also adjusts its CSB value according to S101 to S103, that is, a micro base station 1 executes S103, and a micro base station 2 also executes S103. After the terminal receives an optimized CSB value sent by the micro base station 1 and an optimized CSB value sent by the micro base station 2, the terminal may choose to access, according to the optimized CSB value from the micro base station 1 and the optimized CSB value from the micro base station 2, a micro base station by using which a better communications service can be obtained. Alternatively, if the terminal determines, according to the optimized CSB value from the micro base station 1 and the optimized CSB value from the micro base station 2, that a better service can be obtained by accessing another macro base station, the terminal chooses to access the another macro base station. In this way, each terminal in the communications network properly accesses a corresponding micro base station or macro base station, which avoids that a large quantity of terminals all access one micro base station or macro base station and also avoids a problem resulted from a coverage hole in the communications network. Therefore, each micro base station completes performance optimization of a respective coverage area in the communications network by using a respective optimized CSB value.

In this embodiment, a CSB value of a micro base station is adjusted by the micro base station; the micro base station can adjust the CSB value in a timely way according to a dynamic change of a communications network, so as to effectively optimize the communications network. Compared with the prior art, in this embodiment, because CSB value adjustment is no longer controlled by a network controller, a CSB value adjustment frequency of the micro base station does not need to be remained the same as an ABS value adjustment frequency; the micro base station can adjust the CSB value at a relatively small time interval to optimize the dynamically changed communications network in a timely way, avoiding enormous signaling overheads. In addition, a capacity and coverage of the micro base station are considered during communications network optimization, so that network hotspot and coverage hole problems that are caused by a dynamic load change of a terminal in the communications network can be resolved effectively, facilitating performance improvement of the communications network.

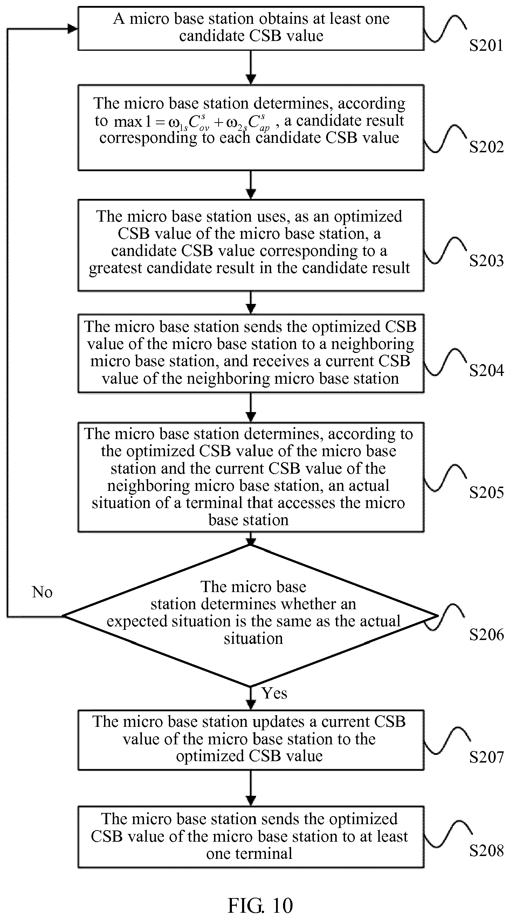

FIG. 10 is a flowchart of Embodiment 2 of a communications network optimization processing method according to the present invention. As shown in FIG. 10, this embodiment provides further descriptions on a basis of the embodiment shown in FIG. 9. Details are as follows:

S201: A micro base station obtains at least one candidate CSB value.

An optional specific execution process of step S201 is as follows:

S1: The micro base station obtains a receive power, for the micro base station, of each terminal of the at least one terminal and a receive power, for a macro base station, of each terminal of the at least one terminal.

If the micro base station executes S1 for the first time, an initial value used as a first CSB value may be set to 0 dB. The foregoing at least one terminal is a terminal near the micro base station, or a terminal that can execute data transmission with the micro base station, and specifically includes a terminal that has accessed the micro base station, or may further include a terminal that has not accessed the micro base station, but can communicate with the micro base station. In response to a request from the micro base station, the terminal near the micro base station returns, to the micro base station, a receive power for the terminal to receive a signal from the micro base station and a receive power for the terminal to receive a signal from the macro base station. There is at least one macro base station, and correspondingly, the terminal returns, to the micro base station, a receive power for receiving a signal from each macro base station of the at least one macro base station.

S2: The micro base station adds the first CSB value and the receive rate, for the micro base station, of each terminal of the at least one terminal to obtain a first value corresponding to each terminal of the at least one terminal.

S3: The micro base station determines, in the at least one terminal according to the first value corresponding to each terminal of the at least one terminal and the receive rate, for the macro base station, of each terminal of the at least one terminal, a set $E_s$ corresponding to the first CSB value.

For example, in S1, the micro base station receives information reported by five terminals. Using a first terminal in the five terminals as an example, a receive power, for the micro base station, of the first terminal is $RSRP_{\text{first terminal}, s}$, and a receive power, for the macro base station, of the first terminal is $RSRP_{\text{first terminal}, m}$, where m represents a macro base station. It is determined, according to $\max_{m,s}\{RSRP_{\text{first terminal},m}, RSRP_{\text{first terminal},s} + CSB_s\}$, whether the first terminal accesses the micro base station, where $CSB_s$ is a first CSB value, and $RSRP_{\text{first terminal}, s} + CSB_s$ is a first value corresponding to the first terminal. In an actual application, there are usually multiple macro base stations, but in this embodiment, one macro base station is used as an example in $\max_{m,s}\{RSRP_{\text{first terminal},m}, RSRP_{\text{first terminal},s} + CSB_s\}$ for ease of description. If a result obtained according to $\max_{m,s}\{RSRP_{\text{first terminal},m}, RSRP_{\text{first terminal},s} + CSB_s\}$ is $RSRP_{\text{first terminal}, m}$, it indicates that the first terminal does not choose to access the micro base station if the micro base station sets the first CSB value; if a result obtained according to $\max_{m,s}\{RSRP_{\text{first terminal},m}, RSRP_{\text{first terminal},s} + CSB_s\}$ is $RSRP_{\text{first terminal}, s} + CSB_s$, it indicates that the first terminal chooses to access the micro base station if the micro base station sets the first CSB value. In this case, the first terminal that accesses the micro base station in a case of the first CSB value is saved to a set corresponding to the first CSB value. In this embodiment, a set corresponding to any first CSB value is expressed as $E_s$.

Referring to the first terminal, determining is executed on each terminal of the five terminals, so that terminals, which access the micro base station in a case of the first CSB value, in the five terminals form the set $E_s$ corresponding to the first CSB value.

S4: Determine, according to the set $E_s$ corresponding to the first CSB value, whether a load of the micro base station is equal to 1; and if yes, execute S5, or if no, execute S6.

For example, the set $E_s$ corresponding to the first CSB value in S3 includes the first terminal, a second terminal, and a fifth terminal; in this case, a load of the micro base station is calculated according to current service traffic reported by the first terminal, the second terminal, and the fifth terminal each and association rates between the three terminals and the micro base station (an association rate between a terminal and a micro base station may be expressed by using a mean of rates of receiving downlink data from the micro base station by the terminal within a period of time). However, the association rate is affected by a current ABS value of each macro base station in the communications network. Specifically, for the set $E_s$ corresponding to the first CSB value, a load of the micro base station may be calculated with reference to the foregoing $load_s = \sum_{u \in U_s} \dfrac{d_u}{R_{u,s}}$.

S5: Use the first CSB value as the candidate CSB value.

Using the initial 0 dB as an example, S5 is executed after S1 to S4 are executed. That is, the micro base station determines, according to the set $E_s$ corresponding to 0 dB, that a load of the micro base station corresponding to 0 dB is equal to 1. In this case, 0 dB is used as a candidate CSB value; then, S202 is executed.
S6: Use the first CSB value as the candidate CSB value, increase the first CSB value by a preset step to obtain a new first CSB value, and return to execute S1.

Using the initial 0 dB as an example, S6 is executed after S1 to S4 are executed. That is, it is determined, according to the set $E_s$ corresponding to 0 dB, that a load of the micro base station corresponding to 0 dB is less than 1. In this case, 0 dB is used as a candidate CSB value, 0 dB is increased by a preset step of 5 dB to obtain a new first CSB value, namely, 5 dB, and return to S1, until the first CSB value reaches a preset threshold CSB value; and then, S202 is executed.

It can be learned from S1 to S6 that an association rate between each terminal of the at least one terminal and the micro base station is affected by a current ABS value of each macro base station in the communications network. For example, an association rate between each terminal in the set $E_s$ corresponding to the first CSB value and the micro base station is affected by the current ABS value of each macro base station, thereby affecting whether a load corresponding to the first CSB value is less than 1 and finally affecting whether the first CSB value is used as the candidate CSB value.

S202: The micro base station determines, according to $\max 1 = \omega_{1s} C_{ov}^s + \omega_{2s} C_{ap}^s$, a candidate result corresponding to each candidate CSB value.

max1 is the candidate result, $\omega_{1s}$ is a coverage weight of the micro base station, and $\omega_{2s}$ is a capacity weight of the micro base station. It should be noted that before S202 is executed, the micro base station receives parameter information, where the parameter information carries the capacity weight of the micro base station and the coverage weight of the micro base station. Specifically, the parameter information may be specifically an ABS value optimization completion message that triggers the micro base station to execute S201, or the parameter information may be obtained before the micro base station executes S201. $C_{ov}^s$ is a coverage-related KPI (Key Performance Indicator, key performance indicator) of the micro base station; $C_{ap}^s$ is a capacity-related KPI of the micro base station, $C_{ov}^s = R_s^{z\%-ile}$, and

$$C_{ap}^s = \sum_e [R_{e,s} \times h(R_{e,s}, R_e^{req})];\ R_s^{z\%-ile}$$ is a mean of association rates, for the micro base station, corresponding to z% terminals in a set $E_s$, and an association rate between any terminal in the z% terminals and the micro base station is not greater than an association rate between any terminal in the set $E_s$ except the z% terminals and the micro base station; a different candidate CSB value corresponds to a different set $E_s$, and z% terminals in the different set $E_s$ correspond to different $R_s^{z\%-ile}$; and e represents any terminal in the set $E_s$, $R_{e,s}$ represents an association rate of the terminal e in the set $E_s$ associated with the micro base station, $R_e^{req}$ is a required rate of the terminal e, and a value of

$$h(R_{e,s}, R_e^{req})$$ is determined according to $h(x, x_0) = \begin{cases} 1, & x \geq x_0 \\ 0, & x < x_0 \end{cases}$.

For example, a set $E_s$ corresponding to a candidate CSB value and determined in S201 includes first to fifth terminals; z% terminals with smallest association rates are selected from the set $E_s$ according to association rates reported by the first to fifth terminals. For example, z is 40, an association rate of the third terminal in the set $E_s$ is less than those of the first terminal, the second terminal, and the fifth terminal, and an association rate of the fourth terminal is less than that of the third terminal. 40% of terminals with the smallest association rates selected from the set $E_s$ are the third terminal and the fourth terminal, and then a mean of the association rate between the third terminal and the micro base station and the association rate between the fourth terminal and the micro base station. It can be understood that a different candidate CSB value corresponds to a different set $E_s$, that is, both terminals included in a different set $E_s$ and a quantity of terminals in the set $E_s$ are different, resulting in different determined $R_s^{z\%-ile}$.

It should be additionally noted that a trigger condition for triggering the micro base station to execute S201 is: The network controller sends an ABS value optimization completion message, where for example, the network controller has adjusted an ABS value of each macro base station in a global scope at a moment t1; the network controller calculates a coverage weight and a capacity weight that are of the micro base station under the influence of each ABS value at the moment t1, and sends, to the micro base station along with the ABS value optimization completion message, the coverage weight and the capacity weight that are of the micro base station and that are obtained through calculation.

However, the network controller determines, at a moment t2 after the moment t1, not to adjust an ABS value, but when a timer of the micro base station determines that a length of time between the moment t1 and the moment t2 reaches a preset length of time, or a load change value of the micro base station at the moment t2 exceeds a preset load change threshold, and the micro base station starts to execute S201, the coverage weight and the capacity weight that are received by the micro base station at the moment t1 are still used as the coverage weight of the micro base station and the capacity weight of the micro base station that are used in S202. That is, the coverage weight of the micro base station and the capacity weight of the micro base station in this embodiment are carried in the ABS value optimization completion message used to trigger the micro base station to execute S201, or the coverage weight of the micro base station and the capacity weight of the micro base station are received before the micro base station executes S201.

S203: The micro base station uses, as an optimized CSB value of the micro base station, a candidate CSB value corresponding to a greatest candidate result in the candidate result.

Optionally, the micro base station may directly execute S207 after executing S203, to complete communications network optimization. However, considering that the set $E_s$ used to determine the optimized CSB value is a set, predicted by the micro base station through calculation, of terminals that access the micro base station, and in a calculation process, another micro base station neighboring the micro base station that executes this embodiment (referred to as a neighboring micro base station in this embodiment, where there is at least one neighboring micro base station) also adjusts a respective CSB value, that is, a CSB value of each micro base station in the communications network is also adjusted continually, after the micro base station changes a current CSB value of the micro base station to the optimized CSB value and broadcasts the optimized CSB value to a surrounding terminal, the at least one neighboring micro base station also broadcasts a current CSB value of the neighboring micro base station to each terminal, and the terminal selects, according to the received CSB value of each micro base station, a micro base station that needs to be accessed. Possibly, a terminal in the set $E_s$ originally used to determine the optimized CSB value of the micro base station may actually choose to access a neighboring micro base station after receiving the optimized CSB value of the micro base station and a current CSB value of the neighboring micro base station in this embodiment; or a terminal that is not the set $E_s$ used to determine the optimized CSB value actually chooses to access, after receiving the optimized CSB value of the micro base station and a current CSB value of a neighboring micro base station in this embodiment, the micro base station that sets the optimized CSB value. Therefore, the micro base station in this embodiment exchanges a CSB value with the neighboring micro base station after obtaining the optimized CSB value, that is, S204 to S206 still need to be executed in this case, so as to obtain an optimized CSB value that better matches a current status of the communications network, ensuring that the terminal chooses to access a more proper micro base station.

S204: The micro base station sends the optimized CSB value of the micro base station to a neighboring micro base station, and receives a current CSB value of the neighboring micro base station.

The optimized CSB value of the micro base station corresponds to an expected situation of a terminal that accesses the micro base station.

S205: The micro base station determines, according to the optimized CSB value of the micro base station and the current CSB value of the neighboring micro base station, an actual situation of a terminal that accesses the micro base station.

The expected situation specifically includes each terminal in a set used to determine the optimized CSB value and a quantity of terminals included in the set used to determine the optimized CSB value. However, the actual situation includes each terminal that chooses to access the micro base station in a case of the optimized CSB value and a quantity of terminals that choose to access the micro base station in the case of the optimized CSB value. For example, the expected situation is specifically: The set used to determine the optimized CSB value includes five terminals, namely, first to fifth terminals. However, the micro base station sends detection data to each surrounding terminal and receives a receive power fed back by each terminal; in this case, the micro base station calculates and determines, according to the receive power fed back by each terminal, the optimized CSB value of the micro base station, and the current CSB value of the neighboring micro base station if the micro base station sets the optimized CSB value, the actual situation is: a quantity of terminal is 3 and terminals that access the micro base station are the first terminal, the second terminal, and the fifth terminal.

S206: The micro base station determines whether the expected situation is the same as the actual situation; and if not, returns to execute S201, or if yes, executes S207.

The returning to execute S201 is determining an optimized CSB value of the micro base station again, so as to obtain a new optimized CSB value of the micro base station, until all optimized CSB values of the micro base station form a convergence array in an order of obtaining. For example, the micro base station obtains an optimized CSB value 1 at a moment t2, but returns to S201 for re-executing after S206 is executed and obtains an optimized CSB value 2 at a moment t3; by analogy, an optimized CSB value 8 is obtained at a moment t9. In this case, the micro base station determines and learns that the optimized CSB value 1 to the optimized CSB value 8 form a convergence array. In this case, regardless of a determining result in S206, S207 is directly executed according to the optimized CSB value 8.

Alternatively, S201 is repeated until a quantity of times of executing S201 reaches a preset threshold in an execution process of an embodiment. For example, before a moment t9, this event "returning to S201 after S206 is executed" has happened for 10 times, where 10 is a preset threshold. After an optimized CSB value 8 is obtained at the moment t9, S207 is directly executed according to the optimized CSB value 8 regardless of a determining result in S206. S207: The micro base station updates a current CSB value of the micro base station to the optimized CSB value.

S208: The micro base station sends the optimized CSB value of the micro base station to at least one terminal.

After the terminal in the communications network receives the optimized CSB value sent by the micro base station, the terminal may determine, according to the optimized CSB value, whether to access the micro base station.

In this embodiment, a CSB value of a micro base station is adjusted by the micro base station; the micro base station can adjust the CSB value in a timely way according to a dynamic change of a communications network, so as to effectively optimize the communications network. Compared with the prior art, in this embodiment, because CSB value adjustment is no longer controlled by a network controller, a CSB value adjustment frequency of the micro base station does not need to be remained the same as an ABS value adjustment frequency; the micro base station can adjust the CSB value at a relatively small time interval to optimize the dynamically changed communications network in a timely way, avoiding enormous signaling overheads. In addition, a capacity and coverage of the micro base station are considered during communications network optimization, so that network hotspot and coverage hole problems that are caused by a dynamic load change of a terminal in the communications network can be resolved effectively, facilitating performance improvement of the communications network. Further, in a process of determining, by each micro base station, a CSB value used to optimize the communications network, two adjacent micro base stations further exchange optimized CSB values to adjust the optimized CSB value, so that a new optimized CSB value obtained after adjustment better match a current communications network.

FIG. 11 is a flowchart of Embodiment 3 of a communications network optimization processing method according to the present invention. As shown in FIG. 11, this embodiment is executed by a network controller. Steps in this embodiment may be executed by using software and/or hardware in the network controller. Preferably, a macro base station in a communications network may integrate a function of the network controller. Details are as follows:

S301: The network controller determines an optimized ABS value for each macro base station. The optimized ABS value is used to optimize the communications network.

S302: The network controller sends the corresponding optimized ABS value to each macro base station.

The macro base station may be specifically a macro base station in the communications network. The network controller determines an optimized ABS value for each macro base station and sends each optimized ABS value to a corresponding macro base station. Each macro base station adjusts an ABS according to an optimized ABS value, so that in a global scope, each macro base station properly interferes with a terminal that accesses a micro base station in a current communications network, avoiding severe impact on a network service obtained by a terminal in the communications network, thereby optimizing service performance of the communications network.

S303: The network controller determines a capacity and coverage for a micro base station according to a current hotspot location and hole location in the communications network.

Specifically, after the communications network is optimized in the global scope, each micro base station further needs to optimize the communications network in an area-based way. When each micro base station further optimizes the communications network in the area-based way, the network controller determines, for each micro base station with reference to the current hotspot location and hole location in the current communications network, capacity and coverage that match the current communications network. For example, some micro base stations are closer to the current hotspot location. Main functions of the micro base stations are load-sharing; therefore, capacity weights of the micro base stations need to be set relatively high. However, some micro base stations are closer to the current hole location. The micro base stations are configured to resolve a problem about coverage, and coverage weights of the micro base stations need to be set relatively high. That is, functions of micro base stations in different locations are different; therefore, when the micro base stations are optimizing the communications network in the area-based way, a different capacity weight and a different coverage weight need to be configured for each micro base station, so that each micro base station optimizes the communications network with reference to the capacity weight and the coverage weight, which can effectively resolve network hotspot and coverage hole problems that are caused by a dynamic change of the communications network. In addition, in S303, the network controller determines the capacity and coverage for the micro base station according to the current hotspot location and hole location in the communications network; in this case, the determined capacity and coverage that are of the micro base station match the communications network at a current moment. That is, according to the capacity and coverage that are determined based on the current hotspot location and hole location, a CSB value determined by the micro base station may be used to effectively resolve the problems about the capacity and coverage in the communications network at the current moment.

S304: The network controller sends an ABS value optimization completion message to the micro base station.

The ABS value optimization completion message carries the capacity and coverage of the micro base station, so that the micro base station determines an optimized CSB value used to optimize the communications network.

It should be additionally noted that in an actual application, execution of S301 is triggered by a piece of information, that is, the network controller obtains a trigger condition used to trigger an ABS value. In this embodiment, an optional trigger condition is that a change value of a service traffic proportion exceeds a preset proportion change threshold, where the service traffic proportion is a ratio of service traffic borne by the micro base station to all service traffic in the communications network. Optionally, the change value of the service traffic proportion may be determined by using the following method.

The network controller divides the communications network into multiple grids physically and continually collects, according to $\sum_{s}\sum_{p \in s} T_p$ , statistics on service traffic borne by a micro base station, where s represents any micro base station in the communications network; p represents a grid, $p \in s$ represents that the grid p is a grid covered by the micro base station s; and $T_p$ represents service traffic in any grid p covered by the micro base station s. It can be understood that, there are multiple terminals in one grid, each terminal has requested a service from a micro base station, and the micro base station needs to bear corresponding service traffic, to provide the services for the terminals; $T_p$ is reported by the micro base station that covers the grid p. Then $\sum_{s}\sum_{p \in s} T_p$ is calculated, and the calculation result is divided by all service traffic in the communications network to obtain a service traffic proportion $\tau$, where all the service traffic include service traffic borne by the macro base station. Finally, a change value $\Delta\tau$ of the service traffic proportion is obtained according to $\Delta\tau = |\tau - \tau_0|$. When $\Delta\tau$ reaches the preset proportion change threshold, S301 is executed, where $\tau_0$ is a service traffic proportion that is obtained when the network controller optimizes the communications network last time. Optionally, the trigger condition is that a length of time recorded on a timer of the network controller reaches a preset length of time. That is, at a moment t1, the network controller determines an optimized ABS value for each macro base station to optimize the communications network, and starts the timer of the network controller, and when the timer operates from the moment t1 to a moment t5, and it is determined that a length of time between the moment t1 and the moment t5 reaches the preset length of time, S301 starts to be executed at the moment t5.

In this embodiment, a network controller determines a capacity and coverage for each micro base station after adjusting an ABS value of each macro base station by using an optimized ABS value, so that each micro base station can optimize a communications network in an area-based way with reference to the capacity and coverage, effectively resolving network hotspot and coverage hole problems that are caused by a dynamic communications network change of the communications network.

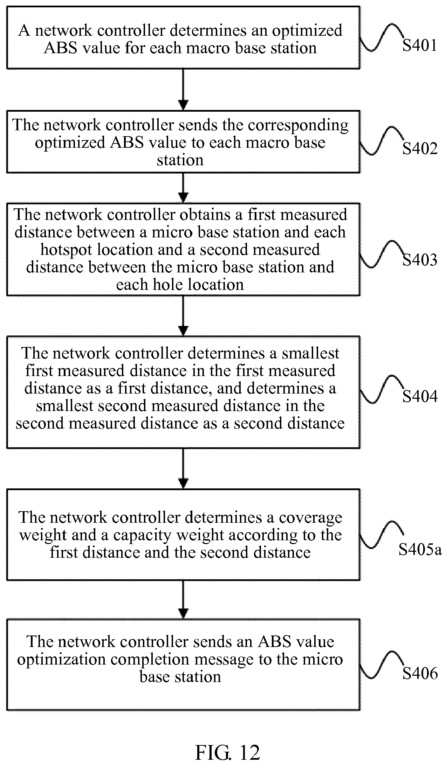

FIG. 12 is a flowchart of Embodiment 4 of a communications network optimization processing method according to the present invention. As shown in FIG. 12, this embodiment provides further descriptions on a basis of the embodiment shown in FIG. 11, which specifically includes:

S401: A network controller determines an optimized ABS value for each macro base station.
S402: The network controller sends the corresponding optimized ABS value to each macro base station.
In this step, each macro base station in a communications network changes a current ABS value to the corresponding optimized ABS value.
S403: The network controller obtains a first measured distance between a micro base station and each hotspot location and a second measured distance between the micro base station and each hole location.
There are multiple hotspot locations and multiple hole locations in the communications network. When determining a current coverage weight and a current capacity weight for a micro base station, the network controller first collects statistics about a first measured distance between the micro base station and each hotspot location and a second measured distance between the micro base station and each hole location.
S404: The network controller determines a smallest first measured distance in the at least one first measured distance as a first distance, and determines a smallest second measured distance in the at least one second measured distance as a second distance.

S405a: The network controller determines a coverage weight and a capacity weight according to the first distance and the second distance.
Specifically, the network controller determines the coverage weight according to the first distance, the second distance, and a previous coverage weight, and determines the capacity weight according to the first distance, the second distance, and a previous capacity weight. That is, the network controller determines the coverage weight according to $\omega_{1s} = \dfrac{\lambda\omega'_{1s}}{(\lambda-1)\omega'_{1s}+1}$ , and determines the capacity weight according to $\omega_{2s} = \dfrac{\omega'_{2s}}{(1-\lambda)\omega'_{2s}+\lambda}$ , where $\omega_{1s}$ is the coverage weight of the micro base station, $\omega_{2s}$ is the capacity weight of the micro base station, $\omega'_{1s}$ is the previous coverage weight of the micro base station, $\omega'_{2s}$ is the previous capacity weight of the micro

base station, $\lambda$ is determined according to $(\dfrac{d_{1s}}{d_{2s}})^{-n} = \lambda$ , $d_{1s}$ is the first distance, $d_{2s}$ is the second distance, and n is an influence coefficient; the value of n may equal to an environment attenuation coefficient, where for example, a value of n may be 3 referring to a channel attenuation model in a 3GPP standard; or may be obtained through measurement.

However, preferably, the network controller further considers a type of each micro base station during initial deployment. For example, some micro base stations are planned and deployed network elements, but some micro base stations are not planned and deployed network elements. For a micro base station that does not need to be planned and deployed , a coverage weight and a capacity weight that are of the micro base station may be adjusted according to a status of a current communications network, so that the micro base station can resolve a problem about a hotspot or coverage in the current communications network. However, for a micro base station that needs to be planned and deployed, when the micro base station is initially disposed, a service of the micro base station is emphasized, in a planned way, on resolving a hotspot problem or coverage problem. Therefore, some configurations for the micro base station also match the emphasis of the service of the micro base station, so that when the capacity weight and the coverage weight that are of the micro base station are adjusted at a current moment, characteristics of some initial configurations of the micro base station need to be considered. Therefore, S405a may be replaced with the following steps.

S405b: Determine whether the micro base station is a planned and deployed network element; and if not, execute S405b1, or if yes, execute S405b2.

S405b1: The network controller determines a coverage weight and a capacity weight according to the first distance and the second distance.

S405b1 is the same as S405a, which can be understood as: One implementation manner is executing S405a immediately after S404 is executed, and then executing S406; a preferable implementation manner is executing S405b for determining after S404 is executed, to choose to execute S405b1 or S405b2, and executing S406 after S405b1 or S405b2 is executed.

S405b2: The network controller determines a coverage weight according to the first distance, the second distance, a previous coverage weight, and an initial coverage weight, and determines a current capacity weight according to the first distance, the second distance, a previous capacity weight, and an initial capacity weight.

Specifically, the network controller determines the coverage weight according to

$$\omega_{1s} = \alpha \frac{\lambda \omega_{1s}'}{(\lambda - 1)\omega_{1s}' + 1} + (1 - \alpha)\omega_{1s}^0 \quad , \quad \text{and determines the capacity weight according to}$$

$$\omega_{2s} = \alpha \frac{\omega_{2s}'}{(1 - \lambda)\omega_{2s}' + \lambda} + (1 - \alpha)\omega_{2s}^0, \text{ where } \omega_{1s}^0 \text{ is the initial coverage weight of the micro base station, } \omega_{2s}^0$$

is the initial capacity weight of the micro base station, and $\alpha$ is a preset smoothness coefficient.

S405b, S405b1, and S405b2, as a possible implementation manner, are not shown in the figure.

In addition, S403 to S405a (or S405b, S405b1, and S405b2) are executed for any micro base station in the communications network. It can be understood that for each micro base station in the communications network, a coverage weight and a current capacity weight of the micro base station can be determined by using the foregoing steps, and then S406 can be executed.

S406: The network controller sends an ABS value optimization completion message to the micro base station.

After determining the coverage weight and the capacity weight for the micro base station in the communications network by executing S405a, or executing S405b, S405b1, and S405b2, the network controller sends the ABS value optimization completion message to the micro base station, where the ABS value optimization completion message carries the capacity weight and the coverage weight that are of the micro base station, so that the micro base station determines an optimized CSB value used to optimize the communications network.

It should be supplemented that the optimized ABS value used to optimize the communications network may be determined for each macro base station in S401 in relatively many manners. The following manner is used as an example in this embodiment, which specifically includes:

C1: The network controller obtains, according to *fitness* = $\varphi \cdot C_{ov}$ + (1 - $\varphi$)$C_{ap}$, a fitness *fitness* set corresponding to a current group of candidate chromosomes.

One group of candidate chromosomes includes Y candidate chromosomes, and each *fitness* in the *fitness* set corresponds to one candidate chromosome, where Y is a preset positive integer. $C_{ov}$ is a coverage KPI of the communications network; $C_{ap}$ is a capacity KPI of the communications network; when a *fitness* set corresponding to a group of candidate chromosomes is calculated, values of $C_{ov}$ and $C_{ap}$ are determined by using the candidate chromosomes in the group, and $\varphi$ is a preset normalized weight with a value range of [0, 1]. Details are as follows:

$$\text{Formula 1:} \quad C_{ov} = E\left(\sum_m \left(\frac{1}{|U_m|}\sum_{p \in U_m} h(R_{p,m}, R_p^{req})\right)\right) + E\left(\sum_s \left(\frac{1}{|U_s|}\sum_{p \in U_s} h(R_{p,s}, R_p^{req})\right)\right) ;$$

and

$$\text{formula 2:} \quad C_{ap} = E\left(\sum_m \sum_{p \in U_m} \ln R_{p,m}\right) + E\left(\sum_s \sum_{p \in U_s} \ln R_{p,s}\right),$$

where both a value of $h(R_{p,m}, R_p^{req})$ and a value of $h(R_{p,s}, R_p^{req})$ are determined according to

$$h(x, x_0) = \begin{cases} 1, & x \geq x_0 \\ 0, & x < x_0 \end{cases}, \text{ where}$$

m represents any macro base station in the communications network, $U_m$ represents a quantity of terminals that access the macro base station, and $U_s$ represents a quantity of terminals that access a micro base station s; $R_{p,m}$ represents an association rate between a grid p and a macro base station m in the communications network, $R_{p,s}$ represents an association rate of the grid p associated with a micro base station, and $R_p^{req}$ represents a required rate of the grid p, where for example, $R_p^{req}$ can be obtained by averaging required rates reported by five terminals in the grid p, while $R_{p,m}$ is determined according to $R_{p,m} = (1 - \beta_m) \cdot Eff_{mimo} N_{RB,p} \log_2 (1 + RSSINR_{p,m})$, where

$\beta_m$ represents any candidate ABS value in any candidate chromosome, $Eff_{mimo}$ is a rate gain brought by a known MIMO (Multiple-Input Multiple-Output, multiple-input multiple-output) system, $N_{RB,p}$ is a resource block obtained by a known grid p, $RSSINR_{p,m}$ is a signal-to-interference-plus-noise ratio of a received signal of the grid p for the macro base station m, and $RSSINR_{p,m}$ is determined according to a formula 3, which is specifically:

$$\text{formula 3:} \quad RSSINR_{p,m} = \frac{RSRP_{p,m}}{\sum_{m \in I_m} RSRP_{p,m} + \sum_{s \in I_m} RSRP_{p,s} + \eta},$$

where

$\eta$ is a noise power, $RSRP_{p,m}$ is a receive power, for a macro base station m, of the grid p, $RSRP_{p,s}$ is a receive power, for a micro base station s, of the grid p, and $I_m$ represents a set of interfered cells.

$R_{p,s}$ is calculated according to a formula 4:

$$R_{p,s} = \begin{cases} (1 - \beta_m) \cdot Eff_{mimo} N_{RB,p} \log_2 (1 + RSSINR_{p,s}) & nonABS \\ \beta_m \cdot Eff_{mimo} N_{RB,p} \log_2 (1 + RSSINR_{p,s}) & ABS \end{cases}, \text{ where}$$

$RSSINR_{p,s}$ is a signal-to-interference-plus-noise ratio when the grid p receives a signal from the micro base station; and

$$\text{formula 5:}\quad RSSINR_{p,s} = \begin{cases} \dfrac{RSRP_{p,s}}{\sum\limits_{m\in I_s} RSRP_{p,m} + \sum\limits_{q\in I_s} RSRP_{p,q} + \eta} & nonABS \\[2em] \dfrac{RSRP_{p,s}}{\sum\limits_{q\in I_s} RSRP_{p,q} + \eta} & ABS \end{cases}.$$

It should be noted that when $RSSINR_{ps}$ is substituted into the formula 4, substitution is executed according to ABS and nonABS separately, where for example, $\dfrac{RSRP_{p,s}}{\sum\limits_{q\in I_s} RSRP_{p,q} + \eta}$ is substituted only into $\beta_m \cdot Eff_{mimo} N_{RB,p} \log_2 (1 + RSSINR_{p,s})$; however, when the formula 4 is substituted into the formula 1 and the formula 2, $(1 - \beta_m) \cdot Eff_{mimo} N_{RB,p} \log_2(1 + RSSINR_{p,s}) + \beta_m \cdot Eff_{mimo} N_{RB,p} \log_2 (1 + RSSINR_{p,s})$ is substituted.

When C1 is executed initially, one group of candidate chromosomes can be generated randomly to serve as the current group of candidate chromosomes. For example, there are 10 macro base stations in the communications network, one candidate ABS value is generated randomly for each macro base station; respective candidate ABS values for the 10 macro base stations form a candidate chromosome. In addition, 100 candidate chromosomes are usually initially generated to form a current group of candidate chromosomes and a *fitness* set corresponding to the current group of candidate chromosomes is obtained through calculation according to the foregoing formulas.

C2: The network controller determines whether a change value between a greatest *fitness* in the *fitness* set corresponding to the current group of candidate chromosomes and a greatest *fitness* in a *fitness* set corresponding to a previous group of candidate chromosomes is greater than a preset *fitness* change threshold; and if not, executes C3, or if yes, executes C4.

The current group and the previous group are relative concepts. It can be understood that a group of candidate chromosomes is generated at an initial moment t0; in this case, when C1 is executed at the initial moment, the group of candidate chromosomes generated at the initial moment is a current group of candidate chromosomes. Because there are no other candidate chromosomes before the initial moment, C4 to C6 are directly executed for the group of candidate chromosomes generated at the initial moment, so as to obtain a new group of candidate chromosomes. At a moment t1 after the initial moment, when C1 is executed for the new group of candidate chromosomes, the new group of candidate chromosomes is the current group of candidate chromosomes. In this case, the group of candidate chromosomes generated at the moment t0 is a previous group of candidate chromosomes relative to the new group of candidate chromosomes.

C3: Determine whether a quantity of times a genetic algorithm operation for obtaining the current group of candidate chromosomes is executed exceeds a preset genetic threshold; and if not, execute C4, or if yes, execute C7.

C4: Select y candidate chromosomes corresponding to y greatest *fitness* in the *fitness* set corresponding to the current group of candidate chromosomes as y paternal chromosomes, where y is a preset positive integer, and Y>y.

C5: The network controller executes the genetic algorithm operation on the y paternal chromosomes to obtain (Y - y) daughter chromosomes.

C6: The network controller obtains a new current group of candidate chromosomes with reference to the y paternal chromosomes and the (Y - y) daughter chromosomes, and returns to execute C1.

C7: The network controller determines, as an optimized chromosome, a candidate chromosome corresponding to the greatest *fitness* in the fitness *fitness* set corresponding to the current group of candidate chromosomes.

C8: The network controller determines the optimized ABS value for each macro base station according to the optimized chromosome.

When values of $C_{ov}$ and $C_{ap}$ are determined in C2, authentic data in the communications network is introduced, for example, authentic information such as $U_m$, $U_s$, $R_{p,m}$, and $R_{p,s}$ on which statistics are collected or that is reported by a terminal. That is, when the values of $C_{ov}$ and $C_{ap}$ are determined according to authentic data, each candidate ABS value in the optimized chromosome in C7 is used as an optimized ABS value corresponding to each macro base station. However, considering that optimization of the communications network requires a specific time, the communications network changes dynamically within the optimization time. In order that an optimized ABS value can be used to effectively optimize the communications network, the network controller can execute prediction according to historical service traffic and historical authentic data. For example, a current moment is t1, and a time required for optimization and adjustment is Δ*t*; the network controller predicts information, which is served as predicted data, such as a quantity of terminals that access a macro base station in the communications network at a moment *t*1 + Δ*t*, a quantity of terminals that access a micro base station, an association rate between each terminal and the micro base station, and an association rate between each terminal and the macro base station according to authentic data (which specifically includes parameters required in formula 1 to the formula 5, such as $U_m$, $U_s$, $R_{p,m}$, and $R_{p,s}$) obtained before the moment t1, to obtain $C_{ov}$ and $C_{ap}$ for the moment *t*1 + Δ*t*. That is, values of $C_{ov}$ and $C_{ap}$ for the moment *t*1 + Δ*t* are related to the predicted data in the communications network, and the predicted data is determined according to the authentic data. Then, based on $C_{ov}$ and $C_{ap}$ that are related to the predicted data in the communications network, the optimized chromosome is determined by using C2 to C7; and when C8 is executed, the optimized ABS value is determined for each macro base station according to $\beta_{last} = \rho \cdot \beta_m^c + (1 - \rho) \cdot \beta_m^p$.

$\beta_{last}$ represents the optimized ABS value of the macro base station; $\beta_m^c$ represents a candidate ABS value in the optimized chromosome determined by using the authentic data; $\beta_m^p$ represents a candidate ABS value in the optimized chromosome determined by using the predicted data; $\rho$ is a preset smoothness weight; in this way, in a process of executing S402, C1 to C7 are executed according to the authentic data to determine $\beta_m^c$ for a macro base station, and C1 to C7 are executed by using the predicted data to determine $\beta_m^p$ for the macro base station; finally, C8 is executed to determine the optimized ABS value for the macro base station according to $\beta_{last} = \rho \cdot \beta_m^c + (1 - \rho) \cdot \beta_m^p$.

In this embodiment, a network controller determines an optimized ABS value for each macro base station by means of a genetic algorithm operation, so that performance of a communications network is optimized in a global scope; and determines a current capacity weight and a current coverage weight for each micro base station after adjusting an ABS value of each macro base station by using the optimized ABS value, so that each micro base station can optimize the communications network in an area-based way with reference to a respective current capacity weight and current coverage weight according to a respective characteristic, effectively resolving network hotspot and coverage hole problems that are caused by a dynamic communications network change of the communications network.

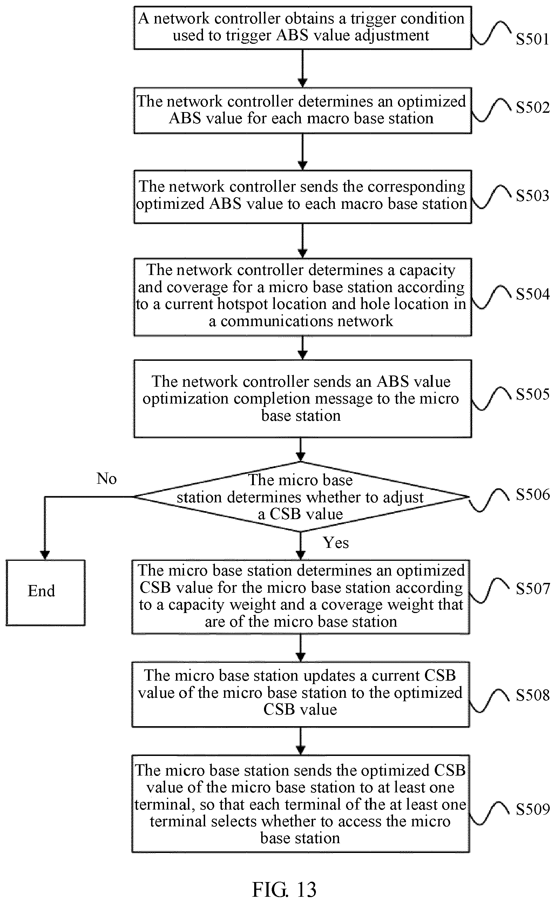

FIG. 13 is a flowchart of Embodiment 5 of a communications network optimization processing method according to the present invention. As shown in FIG. 13, this embodiment provides descriptions on a basis of any embodiment in FIG. 9 to FIG. 12.

S501: A network controller obtains a trigger condition used to trigger ABS value adjustment.

As described above, the trigger condition is specifically that a change value of a service traffic proportion exceeds a preset proportion change threshold, or the trigger condition is that a length of time recorded on a timer of the network controller reaches a preset length of time.

S502: The network controller determines an optimized ABS value for each macro base station. Details are described in S401.

S503: The network controller sends the corresponding optimized ABS value to each macro base station.

S504: The network controller determines a capacity and coverage for a micro base station according to a current hotspot location and hole location in a communications network.

S505: The network controller sends an ABS value optimization completion message to the micro base station.

A specific execution process of S504 and S505 is described in S403 to S406.

S506: The micro base station determines whether to adjust a CSB value; and if yes, executes S507, or if not, ends the process.

When S506 is executed, the micro base station may use the received ABS value optimization completion message as the trigger condition used to adjust the CSB value. Alternatively, even if the micro base station receives the ABS value optimization completion message, the micro base station uses, as the trigger condition used to adjust the CSB value, that a length of time recorded on a timer of the micro base station reaches a preset length of time; in this case, the micro base station determines whether the length of time recorded on the timer of the micro base station reaches the preset length of time, and if yes, executes S507, or if not, ends the process. Alternatively, the micro base station uses, as the trigger condition used to adjust the CSB value, that a load change value of the micro base station exceeds a preset load change threshold; in this case, the micro base station determines whether the load change value of the micro base station exceeds the preset load change threshold, and if yes, executes S507, or if not, ends the process. S507: The micro base station determines an optimized CSB value for the micro base station according to a capacity weight and a coverage weight that are of the micro base station.

Details are described in S201 to S203.

S508: The micro base station updates a current CSB value of the micro base station to the optimized CSB value.

S509: The micro base station sends the optimized CSB value of the micro base station to at least one terminal, so that each terminal of the at least one terminal selects whether to access the micro base station.

It should be noted that in this embodiment, when the trigger condition used to adjust the CSB value is that the load change value of the micro base station exceeds the preset load change threshold, or is that whether the length of time recorded on the timer of the micro base station reaches the preset length of time, S506 to S509 can be executed independently. Further, after S508 and before S509, the micro base station may further execute steps described in S204 to S207.

In this embodiment, a CSB value adjustment frequency does not need to be remained the same as an ABS value adjustment frequency; in this case, a micro base station can adjust a CSB value at a relatively small time interval to optimize a dynamically changed communications network in a timely way, avoiding enormous signaling overheads. In addition, a capacity weight and a coverage weight are considered during communications network optimization, which can effectively resolve network hotspot and coverage hole problems that are caused by a dynamic load change of a terminal in the communications network, facilitating performance improvement of the communications network.

**Claims**

1.  A micro base station, comprising:

    a determining module (21), configured to determine an optimized cell selection bias, CSB, value according to a capacity and coverage of the micro base station, wherein the determining module determines the optimized CSB value after a network controller in a communications network sends an almost blank subframe, ABS, value optimization completion message to the micro base station;
    an update module (22), configured to update a current CSB value of the micro base station to the optimized CSB value; and
    a sending module (23), configured to send the optimized CSB value of the micro base station to at least one terminal.

2.  The micro base station according to claim 1, further comprising a receiving module, wherein
    the sending module (23) is further configured to send the optimized CSB value to a neighboring micro base station;
    the receiving module (24) is configured to receive a current CSB value of the neighboring micro base station;
    the determining module (21) is further configured to determine, according to the optimized CSB value of the micro base station and the current CSB value of the neighboring micro base station, an actual situation of a terminal that accesses the micro base station; and
    if the actual situation is different from an expected situation, of the terminal that accesses the micro base station, corresponding to the optimized CSB value of the micro base station, the determining module is configured to determine an optimized CSB value.

3.  The micro base station according to claim 2, wherein the receiving module (24) is further configured to receive parameter information; and the parameter information carries a capacity weight of the micro base station and a coverage weight of the micro base station.

4.  The micro base station according to claim 3, wherein the determining module specifically comprises:

    an obtaining unit (211), configured to obtain at least one candidate CSB value;
    a determining unit (212), configured to determine, according to $\max 1 = \omega_{1s}C_{ov}^s + \omega_{2s}C_{ap}^s$, a candidate result corresponding to each candidate CSB value; and
    a selection unit (213), configured to use, as the optimized CSB value of the micro base station, a candidate CSB value corresponding to a greatest candidate result in the at least one candidate result, wherein
    max 1 is the candidate result, $\omega_{1s}$ represents the coverage weight of the micro base station, and $\omega_{2s}$ represents the capacity weight of the micro base station; $C_{ov}^s$ is a coverage-related key performance indicator KPI of the micro base station; $C_{ap}^s$ is a capacity-related KPI of the micro base station, $C_{ov}^s = R_s^{z\%-ile}$, and $C_{ap}^s = \sum_e [R_{e,s} \times h(R_{e,s}, R_e^{req})]$; $R_s^{z\%-ile}$ is a mean of association rates, for the micro base station, corresponding to z% terminals in a set $E_s$, and an association rate between any terminal in the z% terminals and the micro base station is not greater than an association rate between any terminal in the set $E_s$ except the z% terminals and the micro base station; a different candidate CSB value corresponds to a different set $E_s$, and

z% terminals in the different set $E_s$ correspond to different $R_s^{z\%-ile}$; and e represents any terminal in the set $E_s$, $R_{e,s}$ represents an association rate of the terminal e in the set $E_s$ associated with the micro base station, $R_e^{req}$ is a required rate of the terminal e, and a value of $h(R_{e,s}, R_e^{req})$ is determined according to

$$h(x, x_0) = \begin{cases} 1, & x \geq x_0 \\ 0, & x < x_0 \end{cases}.$$

5. A communications network optimization processing method, comprising:

determining (S101), by a micro base station, an optimized cell selection bias CSB value according to a capacity and coverage of the micro base station, wherein the optimized CSB value is determined after a network controller in a communications network sends an almost blank subframe value optimization completion message to the micro base station;
updating (S102), by the micro base station, a current CSB value of the micro base station to the optimized CSB value; and
sending (S103), by the micro base station, the optimized CSB value of the micro base station to at least one terminal.

6. The processing method according to claim 5, wherein before the micro base station updates the current CSB value to the optimized CSB value, the processing method further comprises:

sending, by the micro base station, the optimized CSB value to a neighboring micro base station;
receiving, by the micro base station, a current CSB value of the neighboring micro base station;
determining, by the micro base station according to the optimized CSB value of the micro base station and the current CSB value of the neighboring micro base station, an actual situation of a terminal that accesses the micro base station; and
if the actual situation is different from an expected situation, of the terminal that accesses the micro base station, corresponding to the optimized CSB value of the micro base station, determining, by the micro base station, an optimized CSB value.

7. The processing method according to claim 6, wherein before the determining, by a micro base station, an optimized CSB value according to a capacity and coverage of the micro base station, the method further comprises:
receiving, by the micro base station, parameter information, wherein the parameter information carries a capacity weight of the micro base station and a coverage weight of the micro base station.

**Patentansprüche**

1. Mikrobasisstation, umfassend:

ein Bestimmungsmodul (21), ausgelegt zum Festlegen eines optimierten Zellauswahl-Bias-, CSB-, -Werts entsprechend einer Kapazität und Abdeckung der Mikrobasisstation, wobei das Bestimmungsmodul den optimierten CSB-Wert ermittelt, nachdem eine Netzwerksteuerung in einem Kommunikationsnetzwerk eine Optimierungsabschlussnachricht eines fast leeren Subrahmen-, ABS-, -Wertes zu der Mikrobasisstation sendet;
ein Aktualisierungsmodul (22), dafür ausgelegt, einen aktuellen CSB-Wert der Mikrobasisstation zu dem optimierten CSB-Wert zu aktualisieren; und
ein Sendemodul (23), dafür ausgelegt, den optimierten CSB-Wert der Mikrobasisstation zu mindestens einem Endgerät zu senden.

2. Mikrobasisstation nach Anspruch 1, ferner umfassend ein Empfangsmodul, wobei
das Sendemodul (23) ferner ausgelegt ist zum Senden des optimierten CSB-Werts zu einer benachbarten Mikrobasisstation;
das Empfangsmodul (24) ausgelegt ist zum Empfangen eines aktuellen CSB-Wertes der benachbarten Mikrobasisstation;
das Bestimmungsmodul (21) ferner dafür ausgelegt ist, entsprechend dem optimierten CSB-Wert der Mikrobasisstation und dem aktuellen CSB-Wert der benachbarten Mikrobasisstation eine Ist-Situation eines Endgeräts zu ermitteln, das auf die Mikrobasisstation zugreift; und

falls sich die Ist-Situation von einer erwarteten Situation des Endgeräts, das auf die Mikrobasisstation zugreift, unterscheidet, entsprechend dem optimierten CSB-Wert der Mikrobasisstation, das Bestimmungsmodul dafür ausgelegt ist, einen optimierten CSB-Wert zu ermitteln.

3. Mikrobasisstation nach Anspruch 2, wobei das Empfangsmodul (24) ferner dafür ausgelegt ist, Parameterinformation zu empfangen; und die Parameterinformation eine Kapazitätsgewichtung der Mikrobasisstation und eine Abdeckungsgewichtung der Mikrobasisstation trägt.

4. Mikrobasisstation nach Anspruch 3, wobei das Bestimmungsmodul im Einzelnen umfasst:

eine Erhalteinheit (211), ausgelegt zum Erhalten von mindestens einem Kandidaten-CSB-Wert;

eine Bestimmungseinheit (212), ausgelegt zum Ermitteln, entsprechend $\max 1 = \omega_{1s} C_{ov}^{s} + \omega_{2s} C_{ap}^{s}$ , eines jedem Kandidaten-CSB-Werts entsprechenden Kandidatenresultats; und

eine Auswahleinheit (213), dafür ausgelegt, als den optimierten CSB-Wert der Mikrobasisstation einen Kandidaten-CSB-Wert zu verwenden, der einem größten Kandidatenresultat in dem mindesten einen Kandidatenresultat entspricht, wobei

max1 das Kandidatenresultat ist, $\omega_{1s}$ die Abdeckungsgewichtung der Mikrobasisstation darstellt und $\omega_{2s}$ die Kapazitätsgewichtung der Mikrobasisstation darstellt; $C_{ov}^{s}$ ein abdeckungsbezogener Schlüsselperformanzindikator KPI der Mikrobasisstation ist; $C_{ap}^{s}$ ein kapazitätsbezogener KPI der Mikrobasisstation ist;

$C_{ov}^{s} = R_{s}^{z\%-ile}$ und $C_{ap}^{s} = \sum_{e}[R_{e,s} \times h(R_{e,s}, R_{e}^{req})]$ gilt; $R_{s}^{z\%-ile}$ ein Mittelwert von Assoziationsraten für die Mikrobasisstation ist, entsprechend z% Endgeräten in einer Gruppe $E_s$, und eine Assoziationsrate zwischen einem Endgerät in den z% Endgeräten und der Mikrobasisstation nicht größer ist als eine Assoziationsrate zwischen einem Endgerät in der Gruppe Es mit Ausnahme der z% Endgeräte und der Mikrobasisstation;

ein unterschiedlicher Kandidaten-CSB-Wert einer unterschiedlichen Gruppe $E_s$ entspricht und z% Endgeräte in der unterschiedlichen Gruppe $E_s$ einem unterschiedlichen $R_{s}^{z\%-ile}$ entsprechen; und e ein beliebiges Endgerät in der Gruppe $E_s$ darstellt, $R_{e,s}$ eine Assoziationsrate des mit der Mikrobasisstation assoziierten Endgeräts e in der Gruppe $E_s$ darstellt, $R_{e}^{req}$ eine erforderliche Rate des Endgeräts e ist und ein Wert von $h(R_{e,s}, R_{e}^{req})$ ermittelt wird entsprechend

$$h(x, x_0) = \begin{cases} 1, & x \geq x_0 \\ 0, & x < x_0 \end{cases}$$

5. Kommunikationsnetzwerk-Optimierungsverarbeitungsverfahren, umfassend:

Festlegen (S101) eines optimierten Zellauswahl-Bias-CSB-Werts durch eine Mikrobasisstation entsprechend einer Kapazität und Abdeckung der Mikrobasisstation, wobei der optimierte CSB-Wert ermittelt wird, nachdem eine Netzwerksteuerung in einem Kommunikationsnetzwerk eine Optimierungsabschlussnachricht eines Wertes eines fast leeren Subrahmens zu der Mikrobasisstation sendet;

Aktualisieren (S102) eines aktuellen CSB-Wertes der Mikrobasisstation auf den optimierten CSB-Wert durch die Mikrobasisstation; und

Senden (S103) des optimierten CSB-Wertes der Mikrobasisstation durch die Mikrobasisstation zu mindestens einem Endgerät.

6. Verarbeitungsverfahren nach Anspruch 5, wobei das Verarbeitungsverfahren vor dem Aktualisieren des aktuellen CSB-Wertes durch die Mikrobasisstation auf den optimierten CSB-Wert ferner umfasst:

Senden des optimierten CSB-Wertes durch die Mikrobasisstation zu einer benachbarten Mikrobasisstation;

Empfangen eines aktuellen CSB-Wertes der benachbarten Mikrobasisstation durch die Mikrobasisstation;

Festlegen, durch die Mikrobasisstation entsprechend dem optimierten CSB-Wert der Mikrobasisstation und dem aktuellen CSB-Wert der benachbarten Mikrobasisstation, einer Ist-Situation eines Endgeräts, das auf die Mikrobasisstation zugreift; und

falls sich die Ist-Situation von einer erwarteten Situation des Endgeräts, das auf die Mikrobasisstation zugreift, unterscheidet, Festlegen eines optimierten CSB-Wertes durch die Mikrobasisstation entsprechend dem optimierten CSB-Wert der Mikrobasisstation.

**7.** Verarbeitungsverfahren nach Anspruch 6, wobei das Verfahren vor der Festlegung eines optimierten CSB-Wertes durch eine Mikrobasisstation entsprechend einer Kapazität und Abdeckung der Mikrobasisstation ferner umfasst: Empfangen von Parameterinformation durch die Basisstation, wobei die Parameterinformation eine Kapazitätsgewichtung der Mikrobasisstation und eine Abdeckungsgewichtung der Mikrobasisstation trägt.

**Revendications**

**1.** Micro-station de base, comprenant :

un module de détermination (21), configuré pour déterminer une valeur optimisée de biais de sélection de cellule, CSB, selon une capacité et couverture de la micro-station de base, dans laquelle le module de détermination détermine la valeur optimisée de CSB après qu'un contrôleur de réseau dans un réseau de communication envoie un message d'achèvement d'optimisation de valeur de sous-trame presque vide, ABS, à la micro-station de base ;

un module de mise à jour (22), configuré pour mettre à jour une valeur actuelle de CSB de la micro-station de base à la valeur optimisée de CSB ; et

un module d'envoi (23), configuré pour envoyer la valeur optimisée de CSB de la micro-station de base à au moins un terminal.

**2.** Micro-station de base selon la revendication 1, comprenant en outre un module de réception, dans laquelle

le module d'envoi (23) est en outre configuré pour envoyer la valeur optimisée de CSB à une micro-station de base voisine ;

le module de réception (24) est configuré pour recevoir une valeur actuelle de CSB de la micro-station de base voisine ;

le module de détermination (21) est en outre configuré pour déterminer, selon la valeur optimisée de CSB de la micro-station de base et la valeur actuelle de CSB de la micro-station de base voisine, une situation réelle d'un terminal qui accède à la micro-station de base ; et

si la situation réelle est différente d'une situation escomptée, du terminal qui accède à la micro-station de base, correspondant à la valeur optimisée de CSB de la micro-station de base, le module de détermination est configuré pour déterminer une valeur optimisée de CSB.

**3.** Micro-station de base selon la revendication 2, dans laquelle le module de réception (24) est en outre configuré pour recevoir des informations de paramètre ; et les informations de paramètre portent un poids de capacité de la micro-station de base et un poids de couverture de la micro-station de base.

**4.** Micro-station de base selon la revendication 3, dans laquelle le module de détermination comprend spécifiquement :

une unité d'obtention (211), configurée pour obtenir au moins une valeur candidate de CSB ;

une unité de détermination (212), configurée pour déterminer, selon max1 = $\omega_{1s} C_{ov}^s + \omega_{2s} C_{ap}^s$, un résultat candidat correspondant à chaque valeur candidate de CSB ; et

une unité de sélection (213), configurée pour utiliser, en tant que valeur optimisée de CSB de la micro-station de base, une valeur candidate de CSB correspondant à un résultat candidat le plus grand dans l'au moins un résultat candidat, dans laquelle max1 est le résultat candidat, $\omega_{1s}$ représente le poids de couverture de la micro-station de base, et $\omega_{2s}$ représente le poids de capacité de la micro-station de base ; $C_{ov}^s$ est un indicateur de performance clef KPI connexe à la couverture de la micro-station de base ; $C_{ap}^s$ est un KPI connexe à la capacité de la micro-station de base, $C_{ov}^s = R_s^{z\%-ile}$, et $C_{ap}^s = \sum_e [R_{e,s} \times h(R_{e,s}, R_e^{req})]$ ; $R_s^{z\%-ile}$ est une moyenne de taux d'association, pour la micro-station de base, correspondant à z% terminaux dans un ensemble $E_s$, et un taux d'association entre un quelconque terminal dans les z% terminaux et la micro-station de base n'est pas supérieur à un taux d'association entre un quelconque terminal dans l'ensemble $E_s$ à l'exception des z% terminaux et la micro-station de base ; une valeur candidate de CSB différente correspond à un ensemble différent $E_s$, et z% terminaux dans l'ensemble différent $E_s$ correspondent à une $R_s^{z\%-ile}$ différente ; et $e$ représente un quelconque terminal dans l'ensemble $E_s$, $R_{e,s}$ représente un taux d'association du terminal e dans l'ensemble $E_s$ associé à la micro-station de base, $R_e^{req}$ est un taux requis du terminal $e$, et une valeur de $h\left(R_{e,s}, R_e^{req}\right)$ est déterminée selon $h(x, x_0) = \begin{cases} 1, & x \geq x_0 \\ 0, & x < x_0 \end{cases}$.

5. Procédé de traitement d'optimisation de réseau de communication, comprenant :

   la détermination (S101), par une micro-station de base, d'une valeur optimisée de biais de sélection de cellule, CSB, selon une capacité et couverture de la micro-station de base, dans lequel la valeur optimisée de CSB est déterminée après qu'un contrôleur de réseau dans un réseau de communication envoie un message d'achèvement d'optimisation de valeur de sous-trame presque vide à la micro-station de base ;
   la mise à jour (S102), par la micro-station de base, d'une valeur actuelle de CSB de la micro-station de base à la valeur optimisée de CSB ; et
   l'envoi (S 103), par la micro-station de base, de la valeur optimisée de CSB de la micro-station de base à au moins un terminal.

6. Procédé de traitement selon la revendication 5, dans lequel, avant que la micro-station de base mette à jour la valeur actuelle de CSB à la valeur optimisée de CSB, le procédé de traitement comprend en outre :

   l'envoi, par la micro-station de base, de la valeur optimisée de CSB à une micro-station de base voisine ;
   la réception, par la micro-station de base, d'une valeur actuelle de CSB de la micro-station de base voisine ;
   la détermination, par la micro-station de base, selon la valeur optimisée de CSB de la micro-station de base et la valeur actuelle de CSB de la micro-station de base voisine, d'une situation réelle d'un terminal qui accède à la micro-station de base ; et
   si la situation réelle est différente d'une situation escomptée, du terminal qui accède à la micro-station de base, correspondant à la valeur optimisée de CSB de la micro-station de base, la détermination, par la micro-station de base, d'une valeur optimisée de CSB.

7. Procédé de traitement selon la revendication 6, dans lequel, avant la détermination, par une micro-station de base, d'une valeur optimisée de CSB selon une capacité et couverture de la micro-station de base, le procédé comprend en outre :
   la réception, par la micro-station de base, d'informations de paramètre, dans lequel les informations de paramètre portent un poids de capacité de la micro-station de base et un poids de couverture de la micro-station de base.

FIG. 1

FIG. 2

21

Determining module

211

Obtaining unit

22

Update module

212

Determining unit

213

Selection unit

23

Sending module

24

Receiving module

FIG. 3

201

Processor

202

Sender

FIG. 4

203

Receiver

201

Processor

202

Sender

FIG. 5

31

32

Determining
module

Sending module

FIG. 6

31

Determining module

311

Obtaining unit

312

First
determining unit

313

Second
determining unit

32

Sending module

FIG. 7

301

302

Processor

Sender

FIG. 8

A micro base station determines an optimized CSB value according to a capacity and coverage of the micro base station — S101

The micro base station updates a current CSB value of the micro base station to the optimized CSB value — S102

The micro base station sends the optimized CSB value of the micro base station to at least one terminal — S103

FIG. 9

A micro base station obtains at least one candidate CSB value    S201

The micro base station determines, according to $\max 1 = \omega_{1s} C_{ov}^s + \omega_{2s} C_{ap}^s$, a candidate result corresponding to each candidate CSB value    S202

The micro base station uses, as an optimized CSB value of the micro base station, a candidate CSB value corresponding to a greatest candidate result in the candidate result    S203

The micro base station sends the optimized CSB value of the micro base station to a neighboring micro base station, and receives a current CSB value of the neighboring micro base station    S204

The micro base station determines, according to the optimized CSB value of the micro base station and the current CSB value of the neighboring micro base station, an actual situation of a terminal that accesses the micro base station    S205

No     The micro base station determines whether an expected situation is the same as the actual situation    S206

Yes

The micro base station updates a current CSB value of the micro base station to the optimized CSB value    S207

The micro base station sends the optimized CSB value of the micro base station to at least one terminal    S208

FIG. 10

A network controller determines an optimized ABS value for each macro base station — S301

The network controller sends the corresponding optimized ABS value to each macro base station — S302

The network controller determines a capacity and coverage for a micro base station according to a current hotspot location and hole location in a communications network — S303

The network controller sends an ABS value optimization completion message to the micro base station — S304

FIG. 11

A network controller determines an optimized ABS value for each macro base station ⟶ S401

The network controller sends the corresponding optimized ABS value to each macro base station ⟶ S402

The network controller obtains a first measured distance between a micro base station and each hotspot location and a second measured distance between the micro base station and each hole location ⟶ S403

The network controller determines a smallest first measured distance in the first measured distance as a first distance, and determines a smallest second measured distance in the second measured distance as a second distance ⟶ S404

The network controller determines a coverage weight and a capacity weight according to the first distance and the second distance ⟶ S405a

The network controller sends an ABS value optimization completion message to the micro base station ⟶ S406

FIG. 12

A network controller obtains a trigger condition used to trigger ABS value adjustment ⟶ S501

The network controller determines an optimized ABS value for each macro base station ⟶ S502

The network controller sends the corresponding optimized ABS value to each macro base station ⟶ S503

The network controller determines a capacity and coverage for a micro base station according to a current hotspot location and hole location in a communications network ⟶ S504

The network controller sends an ABS value optimization completion message to the micro base station ⟶ S505

The micro base station determines whether to adjust a CSB value ⟶ S506

No ⟶ End

Yes

The micro base station determines an optimized CSB value for the micro base station according to a capacity weight and a coverage weight that are of the micro base station ⟶ S507

The micro base station updates a current CSB value of the micro base station to the optimized CSB value ⟶ S508

The micro base station sends the optimized CSB value of the micro base station to at least one terminal, so that each terminal of the at least one terminal selects whether to access the micro base station ⟶ S509

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2760237 A1